# FASCICULE DE BREVET EUROPEEN

(11) **EP 3 500 836 B1**
(45) Date de publication et mention de la délivrance du brevet: **23.09.2020**
(21) Numéro de dépôt: 17755148.8
(22) Date de dépôt: 16.08.2017
(51) Int. Cl.: G01N 15/14, G06K 9/46, G06K 9/00

(54) **PROCEDE DE MESURE EN TEMPS REEL DE L'EPAISSEUR DE LA PAROI AVEC MARQUERS À LA FACE INTERNE ET EXTERNE**
VERFAHREN ZUM VERMESSEN DER ZELLWANDDICKE MIT MARKIERUNGEN AN DER INNENSEITE UND DER AUSSENSEITE DER ZELLWAND
PROCEDURE FOR REAL-TIME CELL WALL THICKNESS MEASUREMENT WITH MARKERS ON THE INSIDE AND OUTSIDE OF THE CELL WALL

(30) Priorité: 17.08.2016 FR 1657801
(43) Date de publication de la demande: 26.06.2019
(73) Titulaire: Université Paris Diderot - Paris 7, 75013 Paris (FR); Centre National de la Recherche Scientifique CNRS, 75016 Paris (FR); Institut National de la Santé et de la Recherche Médicale, 75013 Paris (FR); Université de Nice Sophia Antipolis, 06000 Nice (FR)
(72) Inventeur: MINC, Nicolas, 75015 Paris (FR); DAVI, Valeria, 75013 Paris (FR); TANIMOTO, Hirokazu, 75014 Paris (FR); ARKOWITZ, Robert, 06100 Nice (FR); SILVA, Patricia, 06300 Nice (FR)
(74) Mandataire: Regimbeau
(86) Numéro de dépôt international: PCT/EP2017/070729
(87) Numéro de publication internationale: WO 2018/033560

(56) Documents cités:
- US-A1- 2012 120 226
- BRIAN BELARDI ET AL: "Imaging the Glycosylation State of Cell Surface Glycoproteins by Two-Photon Fluorescence Lifetime Imaging Microscopy", ANGEWANDTE CHEMIE INTERNATIONAL EDITION, vol. 52, no. 52, 20 novembre 2013 (2013-11-20), pages 14045-14049, XP055436259, Weinheim ISSN: 1433-7851, DOI: 10.1002/anie.201307512
- RICHARD WHEELER ET AL: "Super-resolution microscopy reveals cell wall dynamics and peptidoglycan architecture in ovococcal bacteria", MOLECULAR MICROBIOLOGY., vol. 82, no. 5, 7 décembre 2011 (2011-12-07), pages 1096-1109, XP055345818, GB ISSN: 0950-382X, DOI: 10.1111/j.1365-2958.2011.07871.x
- Brian Belardi ET AL: "Imaging the Glycosylation State of Cell Surface Glycoproteins by Two-Photon Fluorescence Lifetime Imaging Microscopy", ANGEWANDTE CHEMIE, INTERNATIONAL EDITION, vol. 52, no. 52, 20 November 2013 (2013-11-20), pages 14045-14049, XP055436259, DE ISSN: 1433-7851, DOI: 10.1002/anie.201307512
- Richard Wheeler ET AL: "Super-resolution microscopy reveals cell wall dynamics and peptidoglycan architecture in ovococcal bacteria", MOLECULAR MICROBIOLOGY., vol. 82, no. 5, 7 December 2011 (2011-12-07), pages 1096-1109, XP055345818, GB ISSN: 0950-382X, DOI: 10.1111/j.1365-2958.2011.07871.x

### SEQUENCE LISTING

<110> UNIVERSITE PARIS DIDEROT PARIS 7
   CENTRE NATIONAL DE LA RECHERCHE SCIENTIFIQUE (CNRS)
   INSTITUT NATIONAL DE LA SANTE ET DE LA RECHERCHE MEDICALE
   (INSERM)
   UNIVERSITE DE NICE SOPHIA ANTIPOLIS
   MINC, Nicolas
   DAVI, Valeria
   TANIMOTO, Hirokazu
   ARKOWITZ, Robert
   SILVA, Patricia
<120> PROCEDE DE MESURE EN TEMPS REEL DE L'EPAISSEUR DE LA PAROI ET SES APPLICATIONS
<130> B372708 D36078
<150> FR 1657801
   <151> 2016-08-17
<160> 4
<170> PatentIn version 3.5
<210> 1
   <211> 4
   <212> PRT
   <213> artificial
<220>
   <223> domaine de liaison aux lipides
<220>
   <221> misc_feature
   <222> (2)..(3)
   <223> Xaa représente un acide aliphatique
<220>
   <221> misc_feature
   <222> (4)..(4)
   <223> Xaa représente n'importe quel acide aminé
<400> 1
   Cys Xaa Xaa Xaa
   1
<210> 2
   <211> 4
   <212> PRT
   <213> artificial
<220>
   <223> domaine de liaison aux lipides
<400> 2
   Cys Leu Val Leu
   1
<210> 3
   <211> 16
   <212> PRT
   <213> artificial
<220>
   <223> domaine de liaison aux lipides
<400> 3
   Met Gly Ala Gln Phe Ser Lys Thr Ala Ala Lys Gly Glu Ala Thr Ala
   1               5                   10                  15
<210> 4
   <211> 14
   <212> PRT
   <213> artificial
<220>
   <223> domaine C-terminal de la protéine Rac1
<400> 4
   Lys Lys Arg Lys Ile Lys Arg Ala Lys Lys Cys Thr Ile Leu
   1               5                   10

## Description

La présente invention se rapporte au domaine de l'industrie en biotechnologie, dont la portée d'application est aussi bien dans le secteur de la santé, de l'agro-industrie que de la recherche. La présente invention propose plus particulièrement une nouvelle méthode pour mesurer l'épaisseur de la paroi cellulaire de cellules à paroi, ainsi que sa mise en oeuvre dans diverses applications.

A la différence des cellules animales, les cellules de champignons, de bactéries, d'archées, de plantes et d'algues sont protégées par une paroi cellulaire plus ou moins rigide constituée principalement de chaînes sucrées, qui entoure leur membrane plasmique (Davi *et al.,* 2015). Cette paroi permet non seulement de définir la forme de ces cellules, de supporter leur structure, de transporter des substances et de diffuser des gaz entre l'environnement extérieur et l'intérieur de ces cellules et de cellule à cellule, mais aussi de réguler la pression osmotique de manière à éviter les pertes d'eau et à empêcher la rupture de ces cellules due la pression de turgescence qu'elles contiennent, et de les protéger contre les agressions extérieures, telles que les infections et le stress mécanique.

En raison du rôle protecteur joué par cette paroi, en particulier chez les microbes potentiellement pathogènes que constituent les bactéries et champignons, la paroi cellulaire est l'une des cibles privilégiées des antibiotiques et antifongiques en développement. Cependant, l'émergence de résistance aux drogues conventionnelles, telles que la pénicilline, nécessite d'identifier de nouveaux composés permettant de lutter efficacement contre ces pathogènes.

Cette paroi est activement construite par les cellules à l'aide d'enzymes de synthèse et de remodelage de la membrane, qui secrètent les chaînes sucrées, et est principalement composée de polysaccharides réticulés et/ou de glycoprotéines. En fonction des espèces et du cycle cellulaire, elle est en outre capable de changer de composition et d'épaisseur, cette dernière pouvant ainsi varier entre 10 et 500nm.

L'épaisseur de cette paroi cellulaire est un élément essentiel et critique, non seulement pour le mode de vie de ces cellules, mais également pour leur survie. En effet, il a été observé qu'une paroi trop fine induit la lyse cellulaire, tandis qu'une paroi trop épaisse peut confiner mécaniquement la cellule et l'empêcher de croître ou de se diviser (Davi *et al.,* 2015 ; Chang *et al.,* 2014). Des défauts d'épaisseur de paroi sont également associés à des changements de formes et de fonctions drastiques.

A ce jour, la seule méthode permettant d'observer la paroi cellulaire et de mesurer son épaisseur est la microscopie électronique à transmission (plus connue sous l'abréviation TEM en anglais) (Osumi *et al.,* 1998). Cette méthode requiert toutefois de fixer les cellules, et donc de les tuer, ce qui donc empêche toute observation dynamique de la paroi, et donc de suivi de son développement dans le temps. Elle est en outre coûteuse, laborieuse, et prône à artefacts. A titre illustratif, un protocole typique d'imagerie de la paroi cellulaire par microscopie électronique nécessite entre 5 et 7 jours de préparation de l'échantillon. Il est également très difficile d'observer la paroi dans le plan de symétrie des cellules en raison des coupes devant être effectuées dans le cadre de cette méthode.

Il existe donc un besoin urgent de développer une nouvelle méthode d'imagerie de la paroi cellulaire, permettant de mesurer son épaisseur sans présenter ces inconvénients, et ainsi de suivre en temps réel son développement, aussi bien à des fins de recherche fondamentale que pour identifier de nouveaux agents susceptibles d'altérer son épaisseur, plus particulièrement destinés à lutter contre les microbes pathogènes.

La présente invention répond à ces besoins.

Les Inventeurs ont en effet mis au point un procédé innovant d'imagerie en microscopie à haute résolution, dont les étapes permettent de mesurer, avec précision, fiabilité et à moindre coût, l'épaisseur de la paroi cellulaire en temps réel, chez des cellules vivantes possédant une paroi. Pour ce faire, les faces interne et externe de la paroi cellulaire sont tout d'abord chacune marquées par un marqueur détectable distinct afin de différencier ces faces, puis la cellule ainsi marquée est imagée par un dispositif optique, en particulier par un microscope photonique confocal. La distance entre ces deux marqueurs, correspondant à l'épaisseur de la paroi, est ensuite déterminée automatiquement par analyse de l'image acquise avec le dispositif optique II est alors possible de générer automatiquement des cartes spatiales de l'épaisseur tout autour de la cellule. Le procédé de l'invention peut en outre intégrer une méthode de correction des aberrations chromatiques générées par le dispositif optique. Le procédé de l'invention permet ainsi de mesurer localement, mais aussi globalement, l'épaisseur la paroi cellulaire avec une résolution dans le plan de l'ordre de la cinquantaine de nanomètres et une précision sur la mesure d'épaisseur de +/- 10nm, et d'étudier des cellules en pleine croissance.

Ce procédé a été validé avec succès chez deux espèces de champignons : la levure fissipare *Schizosaccarhomyces pombe* et le champignon pathogène *Candida Albicans.* Sa versatilité a en outre été illustrée par les Inventeurs, qui démontrent ici que le procédé de l'invention est également applicable pour mesurer les changements d'épaisseur consécutifs au traitement par des drogues et dans des mutants de la synthèse de paroi. Ainsi, au-delà des informations précieuses sur la physiologie de cellules à paroi, le procédé de l'invention peut être utilisé pour cribler des composés candidats de type fongicides ou bactéricides ciblant la paroi cellulaire, avec des applications importantes dans le domaine de la santé et de l'agriculture.

La présente invention propose donc un nouveau procédé *in vitro* de mesure en temps réel de l'épaisseur de la paroi cellulaire de cellules à paroi, ainsi que ses applications.

### DESCRIPTION DETAILLEE DE L'INVENTION

Sauf indication contraire, les termes scientifiques et techniques utilisés dans le cadre de la présente invention auront les significations qui sont communément admises par l'homme du métier.

Par « paroi cellulaire », on entend désigner ici une structure extracellulaire entourant plus particulièrement les cellules de champignons, bactéries, archées, plantes et/ou algues. La paroi cellulaire est plus précisément située à l'extérieur de la membrane de ces cellules (plus communément appelée membrane plasmique ou membrane cytoplasmique), et est ainsi en contact avec le milieu extracellulaire. Elle permet de par sa rigidité non seulement de soutenir la structure de la cellule mais également de la protéger, en jouant notamment un rôle de filtre au regard du milieu extracellulaire et en faisant obstacle à l'expansion cellulaire lorsque l'eau pénètre dans la cellule (i.e. par osmorégulation). Elle assure également une certaine plasticité ou élasticité qui est nécessaire à la croissance et à la division cellulaire. Cette paroi est généralement constituée de polysaccharides et/ou de peptides/protéines (glycosylé(e)s ou non glycosylé(e)s), qui sont préférablement entrelacés par de l'hydrogène et/ou des liaisons covalentes. La composition de cette paroi varie néanmoins d'une espèce cellulaire à l'autre : à titre purement illustratif et non limitatif, la paroi cellulaire des champignons comprend principalement de la chitine mais également des glucanes et des mannoprotéines (Perez et Ribas, 2004; Ruiz-Herrera, 2012); celle des bactéries à Gram positif principalement des peptidoglycanes (Seltmann *et al.,* 2002 ; Silhavy *et al.,* 2010); celle des bactéries à Gram négatif principalement des protéines (Seltmann *et al.,* 2002 ; Silhavy *et al.,* 2010); celles d'archées principalement des glycoprotéines, protéines de couches S, pseudopeptidoglycanes et/ou des polysaccharides (König *et al.,* 2010 ; Meyer *et al.,* 2014); celle des plantes majoritairement de la cellulose et de la pectine (d'où son appellation paroi pectocellulosique) (Rose, 2009 ; Keegstra *et al.,* 2010); et celle des algues des glycoprotéines et/ou des polysaccharides (e.g. cellulose), ou de l'acide silicique (Domozych *et al.,* 2012).

Par « épaisseur de la paroi cellulaire », on entend désigner ici la dimension de la paroi telle que définie ci-dessus, mesurée par l'écart ou la distance entre ses deux faces principales, plus ou moins parallèles, et dénommées ici face interne et face externe de la paroi cellulaire. Dans le contexte de la présente invention, cette épaisseur est préférablement déterminée en nanomètres.

Par « face externe de la paroi cellulaire », il faut comprendre ici la partie de la paroi cellulaire qui est du côté extérieur de la cellule, tandis que la « face interne de la paroi cellulaire » désigne la partie de la paroi cellulaire qui est du côté intérieur de la cellule.

Par « marqueur détectable » ou « label détectable », on entend désigner ici une substance ou une molécule, naturelle ou synthétique, qui peut être détectée par un dispositif optique approprié, en particulier, dans le contexte de la présente invention, par un dispositif optique à haute résolution.

De manière préférée, ce marqueur est un « marqueur luminescent », c'est-à-dire un marqueur qui, suite à une excitation (par exemple de nature lumineuse, chimique, enzymatique, etc) émet une radiation lumineuse à une longueur d'onde donnée, dite lumière d'émission ou radiation lumineuse d'émission. Un exemple particulièrement préféré de marqueur luminescent selon l'invention est un marqueur fluorescent.

Par « marqueur fluorescent » ou « fluorophore », il faut comprendre ici un marqueur luminescent coloré, qui absorbe de l'énergie lumineuse à une longueur d'onde donnée (dite lumière d'excitation, ou encore radiation lumineuse d'excitation ou d'absorption) et la restitue sous forme de lumière fluorescente à une autre longueur d'onde (dite lumière d'émission, ou radiation lumineuse d'émission). Un marqueur fluorescent émet une radiation lumineuse dite rapide, c'est-à-dire une radiation lumineuse dont le temps de vie est généralement de l'ordre de 10⁻¹⁰ à 10⁻⁵ secondes, préférablement de 10⁻⁹ à 10⁻⁶ secondes. Les marqueurs fluorescents pouvant être utilisés dans le cadre de la présente invention peuvent être de nature protéique ou non protéique, tels que décrits ci-après.

Le terme « dispositif optique à haute-résolution » désigne ici un dispositif optique pourvu d'une source de lumière, typiquement de lumière monochromatique, et dont la résolution latérale est d'environ 200 nm. De manière préférée, la résolution latérale dudit dispositif est comprise entre environ 150 nm et 250 nm, préférablement entre environ 170 nm et environ 230 nm, et encore plus préférablement entre environ 190 nm et environ 210 nm. Ce dispositif doit être à même de détecter les marqueurs de l'invention, en collectant par exemple sous forme d'image la radiation lumineuse émise par les marqueurs luminescents. Dans le cas où le marqueur luminescent utilisé dans le procédé de l'invention est un marqueur fluorescent, ce dispositif doit être également capable d'exciter ledit marqueur, en émettant une lumière d'excitation adéquate qui sera absorbée ledit marqueur : ce type de dispositif optique est plus connu sous le nom de microscope à fluorescence. Le microscope photonique est un dispositif optique particulièrement préféré de l'invention, tel qu'exposé ci-dessous.

Le terme « environ » signifie que les valeurs indiquées sont approximatives, et plus particulièrement qu'une variation de ces valeurs de plus ou moins 5 % peut être tolérée. Préférablement, la variation tolérée est de plus ou moins 4%, plus préférablement de plus ou moins 3%, 2%, 1%, et le plus préférablement de plus ou moins 0,5%.

D'autres définitions sont données ci-après dans la description.

Les Inventeurs ont développé un procédé nouveau et innovant permettant de mesurer en temps réel l'épaisseur de la paroi cellulaire de cellules à paroi. Ce procédé est non seulement rapide et facile à mettre en oeuvre, mais également précis, robuste et versatile. Il permet notamment de mesurer l'épaisseur de la paroi cellulaire avec une précision de l'ordre de 10 nm, localement, aussi bien dans des cellules vivantes que dans des cellules mortes, pouvant être issues de différentes espèces cellulaires à paroi. Cette mesure locale appliquée tout le long du contour de la cellule peut par ailleurs permettre d'obtenir une mesure globale de l'épaisseur de la paroi, en moyennant par exemple plusieurs mesures locales.

Ainsi, dans un premier aspect, la présente invention propose un procédé *in vitro* pour mesurer en temps réel l'épaisseur de la paroi cellulaire de cellules à paroi, comprenant:
a) fournir au moins une cellule isolée ayant une paroi cellulaire, la face externe de ladite paroi cellulaire étant marquée avec au moins un premier marqueur détectable, et la face interne de ladite paroi cellulaire étant marquée avec au moins un second marqueur détectable, lesdits marqueurs étant distincts l'un de l'autre ;
b) imager ladite cellule et détecter lesdits marqueurs à l'aide d'un dispositif optique à haute-résolution, préférablement à l'aide d'un microscope photonique ;
c) déterminer la distance entre ledit premier marqueur sur la face externe et ledit second marqueur sur la face interne, mesurant ainsi l'épaisseur de la paroi cellulaire.

Par « cellule isolée », il faut comprendre que la cellule étudiée a été séparée de son environnement naturel, et des composants de celui-ci. Ainsi, tel qu'indiqué ci-dessus, le procédé de l'invention est réalisé « *in vitro* », c'est-à-dire en dehors du modèle biologique, en laboratoire, par exemple en milieu artificiel en observant la cellule sur une lame de verre ou tout autre matériel de laboratoire approprié, selon des protocoles bien connus de l'homme du métier (Gupta *et al.,* 2012).

La cellule isolée peut être une cellule vivante, c'est-à-dire une cellule capable de se diviser dans des conditions de culture *in vitro.* Tel qu'indiqué ci-après, le procédé de l'invention permet précisément d'évaluer la viabilité de la cellule étudiée.

Selon un mode de réalisation préféré, la cellule à paroi cellulaire imagée est sélectionnée dans le groupe consistant en les cellules de champignons, de bactéries, d'archées, de plantes et d'algues. De manière préférée, lesdits champignons, bactéries, archées, plantes et/ou algues sont unicellulaires.

Ces espèces cellulaires à paroi sont bien connues de l'homme du métier, et ne sont donc pas détaillées plus avant ici. Celles-ci peuvent être aisément identifiées, notamment selon les critères taxonomiques établis dans l'art tel que ceux de Ruggiero *et al.* (2015). Il est à noter que le procédé de l'invention ne peut pas être réalisé sur des cellules animales (parmi lesquelles les cellules humaines), ni sur des bactéries de type mycoplasme, puisque ces cellules sont dépourvues de paroi. Par ailleurs, si la cellule à paroi selon l'invention est une bactérie, ladite bactérie n'est préférablement pas une bactérie Gram négatif.

De manière encore préférée, la cellule à paroi cellulaire imagée est une cellule de champignon. Des exemples de cellules de champignons particulièrement préférées selon l'invention, néanmoins non limitatifs, sont les cellules de levure, telle que *Schyzosaccharomyces pombe,* et les cellules de *Candica albicans,* qui sont illustrés dans les exemples décrits ci-après.

La cellule à paroi peut être imagée à l'aide de tout dispositif optique à haute-résolution approprié, en particulier par un microscope photonique. Ces dispositifs sont bien connus de l'homme du métier, et incluent, sans limitation, le microscope en champ clair, le microscope en champ sombre, le microscope en lumière polarisée, le microscope à fluorescence, le microscope à contraste de phase (y compris de type interférentiel), le microscope confocal, le microscope à statif inversé, et leur combinaison (Paddock, 2014).

De manière préféré, le microscope photonique à haute-résolution utilisé dans le procédé de l'invention est un microscope confocal.

Un « microscope confocal » est un microscope optique qui a la propriété de réaliser des images de très faible profondeur de champ (environ 400 nm). En positionnant le plan focal de l'objectif à différents niveaux de profondeur dans l'échantillon, il permet de réaliser des séries d'images à partir desquelles on peut obtenir une représentation tridimensionnelle de l'objet. Une image est ensuite recomposée par ordinateur. Ce microscope, qui comprend typiquement une source de lumière monochromatique (e.g. lampe à mercure ou laser), peut en outre utiliser plusieurs rayons de lumière monochromatique de manière simultanée, ce qui permet d'observer plusieurs endroits de l'échantillon (ici la cellule) à la fois.

Des exemples de microscopes confocaux pouvant être utilisés dans le procédé de l'invention sont le microscope confocal à disque rotatif, le microscope confocal à balayage laser (CLSM), ou encore le microscope confocal spectral (ou chromatique).

Le microscope confocal à disque rotatif (ou disque de Nipkov) est ici particulièrement préféré, car il permet de maximiser la résolution spatiale tout en limitant le bruit de fond. Il peut en outre être aisément couplé à un détecteur de manière à pouvoir numériser l'image de la cellule observée.

Un « microscope confocal à disque rotatif » comporte un disque perforé tournant, comme par exemple un disque de Nipkov, et permet de réaliser des images en temps réel ainsi que la scrutation en simultanée de plusieurs endroits. Le disque perforé tournant de ce microscope tourne typiquement à 25 tours par seconde. Il comporte une pluralité de trous, typiquement de 30 à 200. Chaque trou est placé à une distance décroissante du centre, ce qui permet d'analyser l'image ligne par ligne. Un détecteur placé derrière le disque mesure les variations d'intensité de la lumière qui peuvent alors être transmises à un appareil récepteur distant. Avec ce procédé, l'image est alors composée d'autant de lignes que le disque est percé de trous.

Le détecteur utilisé dans le microscope confocal à disque rotatif peut être une caméra à transfert de charge (CCD « Charge Coupled Device »), qui mesure et numérise l'intensité lumineuse. De manière préférée, ledit détecteur est une caméra à transfert de charge à multiplication d'électrons (EM-CCD). Un « EM-CCD » est un dispositif à transfert de charge dans lequel un registre de gain est placé entre le registre à décalage et l'amplificateur de sortie. Le registre de gain est divisé en un grand nombre d'étages de gain. A chaque étage de gain, les électrons sont multipliés par ionisation par impact d'une manière similaire à une diode à avalanche.

Il est entendu que dans le cas où les marqueurs luminescents de l'invention sont des marqueurs fluorescents, le dispositif optique à haute-résolution de l'invention est également un microscope à fluorescence. De manière préférée, ledit dispositif est un microscope confocal à fluorescence, et avantageusement, un microscope confocal à disque rotatif et à fluorescence.

L'homme du métier comprendra aisément que les marqueurs utilisés dans le procédé de l'invention pour marquer respectivement la face externe et la face interne de la paroi cellulaire sont distincts, de manière à pouvoir différencier ces deux faces. Pour ce faire, des marqueurs luminescents émettant des radiations lumineuses de différente longueur d'onde peuvent être utilisés.

Ainsi, selon un mode de réalisation préféré, ledit premier marqueur détectable (i.e. marquant la face externe de la paroi) est un marqueur luminescent émettant une radiation lumineuse dans une première gamme de longueur d'onde, et ledit second marqueur détectable (i.e. marquant la face interne de la paroi) est un marqueur luminescent émettant une radiation lumineuse dans une seconde gamme de longueur d'onde distincte de la première gamme de longueur d'onde.

Le terme « longueur d'onde » (λ) signifie la distance parcourue dans le vide par une radiation lumineuse (ou onde lumineuse) durant un temps T appelé période. Les longueurs d'onde de la lumière visible sont typiquement comprises entre environ 400 nm et environ 760 nm. Par exemple, la longueur d'onde d'une radiation lumineuse violette est typiquement comprise entre environ 380 nm et environ 449 nm, celle d'une radiation lumineuse violette/bleue (majoritairement/minoritairement) entre environ 449 nm et environ 466 nm, celle d'une radiation lumineuse bleue entre environ 466 nm et environ 483 nm, celle d'une radiation lumineuse bleue/verte (majoritairement/minoritairement) entre environ 483 et environ 490 nm, celle d'une radiation lumineuse verte/bleue (majoritairement/ minoritairement) entre environ 490 nm et environ 510 nm, celle d'une radiation lumineuse verte entre environ 510 nm et environ 541 nm, celle d'une radiation lumineuse verte/jaune (majoritairement/minoritairement) entre environ 541 nm et environ 573 nm, celle d'une radiation lumineuse jaune/verte (majoritairement/minoritairement) entre environ 573 nm et environ 575 nm, celle d'une radiation lumineuse jaune entre environ 575 nm et environ 579 nm, celle d'une radiation lumineuse jaune/orangée (majoritairement/minoritairement) entre environ 579 nm et environ 584 nm, celle d'une radiation lumineuse orangée/jaune (majoritairement/minoritairement) entre environ 584 nm et environ 588 nm, celle d'une radiation lumineuse orangée entre environ 588 nm et environ 593 nm, celle d'une radiation lumineuse orangée/rouge (majoritairement/minoritairement) entre environ 593 nm et environ 605 nm, celle d'une radiation lumineuse rouge/orangée (majoritairement/ minoritairement) entre environ 605 nm et environ 622 nm, et celle d'une radiation lumineuse rouge entre environ 622 nm et environ 700 nm. Ainsi, à chaque couleur dite spectrale correspond une longueur d'onde précise.

Par « longueur d'onde distincte », on désigne donc des longueurs d'onde dont le spectre est distinct, par exemple celles telles que définies ci-dessus.

A titre purement illustratif, et non limitatif, l'homme du métier pourra par exemple sélectionner un premier marqueur luminescent émettant une radiation lumineuse rouge, telle qu'une radiation dont la longueur d'onde est préférablement comprise environ 622 nm et environ 700 nm, et un second marqueur luminescent émettant une radiation lumineuse verte, telle qu'une radiation dont la longueur d'onde est préférablement comprise entre environ 510 nm et environ 541 nm, ces longueurs d'ondes étant distinctes l'une de l'autre.

De manière préférée, le premier et le deuxième marqueur détectables utilisés pour marquer la paroi cellulaire sont des marqueurs fluorescents, tels que définis ci-dessus. Ces marqueurs peuvent être de nature protéique ou non protéique.

Le terme « protéique » (qualifiant les protéines), « peptidique » (qualifiant les peptides) ou « polypeptidiques » (qualifiant les polypeptides) fait référence ici à une séquence d'acides aminés joints par des liaisons peptidiques (-NHCO- ), quelle que soit sa longueur, qui peut être d'origine naturelle ou synthétique, et qui peut jouer un rôle structurel et/ou fonctionnel dans une cellule *in vitro* et / ou *in vivo.*

Les marqueurs fluorescents de nature protéique sont bien connus de l'homme du métier, et incluent, sans limitation, les protéines fluorescentes vertes (plus connues sous le nom de GFPs), les protéines fluorescentes rouges (plus connues sous le nom de RFPs) ou oranges, les protéines fluorescentes cyans (plus connues sous le nom de CFPs), les protéines fluorescentes bleues (plus connues sous le nom de BFPs) ou violètes, et les protéines fluorescentes jaunes (plus connues sous le nom de YFPs).

Ces protéines émettent une radiation lumineuse de longueur d'onde correspondant, dans une certaine mesure, à la couleur désignée par leur nom. Elles ont été décrites de manière extensive dans la littérature, et sont pour la plupart disponibles commercialement ou peuvent être aisément produites par l'homme du métier (Shaner *et al.,* 2005 ; Day *et* al., 2009 ; Zimmer, 2015a ; Zimmer, 2015b ; voir également le site internet du Nikon Imaging Center/Université de Californie, San Francisco qui répertorie les propriétés de ces protéines, ainsi que le tableau 1 ci-dessous).

Des exemples de telles protéines fluorescentes, incluent, sans limitation, les protéines de fluorescence verte GFPav (provenant *d'Aequoria Victoria*), EGFP, TagGFP, TagGFP2, TurboGFP, CopGFP, AceGFP, mUKG, superfolder GFP, Emerald, Azami Green (AG), ZsGreen, mWasabi, Clover, mNeonGreen, NowGFP, mClover3, Sapphire, T-Sapphire; les protéines de fluorescence rouge ou orange Kusabira-Orange, mOrange, mOrange2, mKOk, mKO2, tdTomato, DsRed, TagRFP, TagRFP-T, mRuby, mRuby2, mTangerine, mApple, mStrawberry, FusionRed, mCherry, J-Red, mNectarine, mRuby3, mKeimaRed, mBeRFP, LSS-mKAte2, LSS-mKate1, LSSmOrange, mKate2, HcRed-Tandem, mPlum, mRaspberry, mNeptune, NirFP, TagRFP657, TagFRP675, mCardinal, iFP1.4, iFP713 (iRFP), iRFP670, iRFP682, iRFP702, iRFP720, iFP2.0, mIFP; les protéines de fluorescence cyan ECFP, mCFPm, Cerulean, mCerulean3, SCFP, SCFP3A, CyPet, mTurquoise, mTurquoise 2, TagCFP, AmCyan, mTFP1, Midoriishi cyan, Aquamarine; les protéines de fluorescence bleue ou violette EBFP, EBFP2, Azurite, mKalama1, TagBFP, mTagBFP, mTagBFP2, Sirius les protéines de fluorescence jaune EYFP, TagYFP, TurboYFP, ZsYellow, PhiYFP, Topaz, Venus, SYFP2, Citrine, mCitrine, Ypet, SYFP, lanFRP-ΔS83, mPapaya1, mAmetrine.

Le tableau 1 ci-après répertorie les marqueurs fluorescents protéiques de l'invention, avec leurs longueurs d'onde d'excitation et d'émission.

**Tableau 1. Marqueurs fluorescents protéiques selon l'invention**

| **Protéine fluorescente** | **Longueur d'onde d'excitation (λex) à pH7 (nm)** | **Longueur d'onde d'émission (λem) à pH7 (nm)** | **Référence** |
|---|---|---|---|
| **Fluorescence verte émise (GFPs)** | | | |
| GFPav | 395 | 509 | Prendergast *et al*., 1978 |
| EGFP | 488 | 507 | Yang *et al.,* 1996 |
| TagGFP | 482 | 505 | Xia *et al.,* 2002 |
| TagGFP2 | 483 | 506 | Subach *et al.,* 2008 |
| TurboGFP | 482 | 502 | Evdokimov *et al*., 2006 |
| CopGFP | 482 | 502 | Shagin *et al.,* 2004 |
| AceGFP | 480 | 505 | Gurskaya *et al*., 2003 |
| muKG | 483 | 499 | Tsutsui *et al.,* 2008 |
| superfolder GFP | 485 | 510 | Pédelacq *et al.,* 2005 |
| Emerald | 487 | 509 | Cubitt *et al*., 1998 |
| Azami Green (AG) | 492 | 505 | Karazawa *et al.,* 2003 |
| mWasabi | 493 | 509 | Ai *et al.,* 2008a |
| Clover | 505 | 515 | Lam *et al.,* 2012 |
| mNeonGreen | 506 | 517 | Shaner *et al*., 2013 |
| ZsGreen | 493 | 505 | Matz *et al.,* 1999 |
| NowGFP | 494 | 502 | Sarkisyan *et al.,* 2015 |
| mClover3 | 506 | 518 | Bajar *et al*., 2016 |
| Sapphire | 399 | 511 | Cubitt *et al*., 1998 |
| T-Sapphire | 399 | 511 | Zappata-Homer *et al.,* 2003 |

| **Fluorescence rouge émise (incluant le orange et infra-rouge) (RFPs)** | | | |
|---|---|---|---|
| Kusabira-Orange | 548 | 559 | Karasawa *et al*., 2004 |
| mOrange | 548 | 562 | Shaner *et al*., 2004 |
| mOrange2 | 549 | 565 | Shaner *et al*., 2008 |
| mKOk | 551 | 563 | Tsutsui *et al.,* 2008 |
| mKO2 | 551 | 565 | Sakaue-Sawano *et al.,* 2008 |
| tdTomato | 554 | 581 | Shaner *et al*., 2004 |
| DsRed | 556 | 586 | Clontech |
| TagRFP | 555 | 584 | Merzlyak *et al.,* 2007 |
| TagRFP-T | 555 | 584 | Shaner *et al*., 2008 |
| mRuby | 558 | 605 | Kredel *et al.,* 2009 |
| mRuby2 | 559 | 600 | Lam *et al.,* 2012 |
| mTangerine | 568 | 585 | Shaner*et al*., 2004 |
| mApple | 568 | 592 | Shaner *et al*., 2008 |
| mStrawberry | 574 | 596 | Shaner *et al*., 2004 |
| FusionRed | 580 | 608 | Shemiakina *et al.,* 2012 |
| mCherry | 587 | 610 | Shaner *et al.*, 2004 |
| J-Red | 584 | 610 | Evrogen |
| mNectarine | 558 | 578 | Johnson *et al.,* 2009 |
| mRuby3 | 558 | 592 | Bajar *et al.,* 2016 |
| mKeimaRed | 440 | 620 | Kogure *et al.,* 2006 |
| mBeRFP | 446 | 611 | Yang *et al.,* 2013 |
| LSS-mKAte2 | 460 | 605 | Piatkevich *et al.,* 2010 |
| LSS-mKate1 | 463 | 624 | Piatkevich *et al.,* 2010 |
| LSSmOrange | 437 | 572 | Shcherbakova *et al*., 2012 |
| mKate2 | 588 | 633 | Shcherbo *et al.*, 2009 |
| HcRed-Tandem | 590 | 637 | Fradkov et al., 2002 |
| mPlum | 590 | 649 | Wang *et al.*, 2004 |
| mRaspberry | 598 | 625 | Wang *et al.*, 2004 |
| mNeptune | 600 | 650 | Lin *et al.*, 2009 |
| NirFP | 605 | 670 | Shcherbo *et al*., 2010 |
| TagRFP657 | 611 | 657 | Morozova *et al.*, 2010 |
| TagFRP675 | 598 | 675 | Piatkevich *et al.*, 2013 |
| mCardinal | 604 | 659 | Chu *et al.*, 2014 |
| iFP1.4 | 684 | 713 | Shu *et al*., 2009 |
| iFP713 (iRFP) | 690 | 708 | Filonov *et al.*, 2011 |
| iRFP670 | 643 | 670 | Shcherbakova *et al.*, 2013 |
| iRFP682 | 663 | 682 | Shcherbakova *et al.,* 2013 |
| iRFP702 | 673 | 702 | Shcherbakova *et al*., 2013 |
| iRFP720 | 702 | 720 | Shcherbakova *et al*., 2013 |
| iFP2.0 | 690 | 711 | Yu *et al.,* 2014 |
| mlFP | 683 | 704 | Yu *et al.,* 2015 |

| **Fluorescence cyan émise (CFPs)** | | | |
|---|---|---|---|
| ECFP | 433 | 475 | Heim *et al.,* 1994 |
| mCFPm | 433 | 475 | Zacharias *et al.,* 2002 |
| Cerulean | 433 | 475 | Rizzo *et al*., 2004 |
| mCerulean3 | 433 | 475 | Markwardt *et al*., 2011 |
| SCFP | 433 | 474 | Kremers *et al.*, 2006 |
| SCFP3A | 433 | 474 | Kremers et al., 2006 |
| CyPet | 435 | 477 | Nguyen *et al.,* 2005 |
| mTurquoise | 434 | 474 | Goedhardt *et al*., 2010 |
| mTurquoise 2 | 434 | 474 | Goedhardt *et al*., 2012 |
| TagCFP | 458 | 480 | Xia *et al.,* 2002 |
| AmCyan | 458 | 489 | Matz *et al.,* 1999 |
| mTFP1 | 462 | 492 | Ai *et al*., 2006 |
| Midoriishi cyan | 470 | 496 | Karasawa *et al.,* 2004 |
| Aquamarine | 430 | 474 | Erard *et al.,* 2013 |

| **Fluorescence bleue émise (BFPs)** | | | |
|---|---|---|---|
| EBFP | 380 | 460 | Yang *et al.,* 1998 |
| EBFP2 | 383 | 448 | Ai *et al*., 2007 |
| Azurite | 383 | 450 | Mena *et al.*, 2006 |
| mKalama1 | 385 | 456 | Ai *et al.,* 2007 |
| TagBFP | 402 | 457 | Subach *et al.,* 2008 |
| mTagBFP | 399 | 456 | Subach *et al.,* 2008 |
| mTagBFP2 | 399 | 454 | Subach *et al.,* 2011 |
| Sirius | 355 | 424 | Tomosugi *et al.,* 2009 |

| **Fluorescence jaune émise (YFPs)** | | | |
|---|---|---|---|
| EYFP | 513 | 527 | Orm *et al*., 1996 |
| TagYFP | 508 | 524 | Xia *et al*., 2002 |
| TurboYFP | 525 | 538 | Shagin *et al.,* 2004 |
| ZsYellow | 529 | 539 | Matz *et al.,* 1999 |
| PhiYFP | 525 | 537 | Shagin *et al.,* 2004 |
| Topaz | 514 | 527 | Han *et al.,* 2002 |
| Venus | 515 | 528 | Nagai *et al.,* 2002 |
| SYFP2 | 515 | 527 | Kremers *et al.,* 2006 |
| Citrine | 516 | 529 | Griesbeck *et al*., 2001 |
| mCitrine | 516 | 529 | Griesbeck *et al*., 2001 |
| Ypet | 517 | 530 | Nguyen *et al.,* 2005 |
| SYFP | 515 | 527 | Kremers *et al.,* 2006 |
| lanFRP-ΔS83 | 521 | 592 | Pletnev *et al.,* 2013 |
| mPapaya1 | 530 | 541 | Hoi *et al.,* 2013 |
| mAmetrine | 406 | 526 | Ai *et al.,* 2008b |

Les protéines fluorescentes particulièrement préférées selon l'invention sont les protéines fluorescentes vertes et les protéines fluorescentes rouges, et plus particulièrement EGFP et mCherry, respectivement. L'EGFP est la protéine fluorescente la plus préférée de l'invention, elle permet un repliement de la protéine plus rapide et une excitation à 488nm, permettant l'usage d'un laser Argon.

Les marqueurs fluorescents de nature non-protéique sont également bien connus de l'homme du métier, et sont disponibles commercialement. Il s'agit généralement de petites molécules, dont le poids moléculaire peut varier typiquement de 200 à 1000 Daltons, et qui sont donc de taille inférieure à celle des protéines fluorescentes susmentionnées.

Des exemples de tels marqueurs fluorescents non protéiques incluent, sans limitation, le DiBAC (bis-(1,3-dibutylbarbituric acid) trimethine oxonol) et ses dérivés (Haupt *et al.,* 2014), les dérivés de xanthène tels que la fluorescéine et l'isothyocyanate de fluorescéine (FITC), les rhodamines (e.g. rhodamine 110, rhodamine 123, rhodamine 5 GLD, rhodamine 6G, rhodamine B, rhodamine B 200, rhodamine B extra, rhodamine BB, rhodamine BG, rhodamine green, rhodamine red, rhodamine *wt*) et ses dérivés (e.g. tétraméthyl rhodamine isothyocyanate plus connu sous le nom de TRITC, 6-carboxyrhodamine 6G, X-rhodamine), les oregon green (e.g. oregon green 488, oregon green 500, oregon green 514), l'éosine, et le Texas red; les dérivés de cyanine tels que l'indocarbocyanine (Cy3) et son dérivé Cy3.18, l'indodicarbocyanine (Cy5) et ses dérivés Cy 5.5. et Cy5.18, l'indotricarbocyanine (Cy7) l'oxacarbocyanine (Cy2), la thiacarbocyanine, et la mérocyanine; les dérivés de squaraine ; les dérivés de naphthalène tels que le dansyl (e.g. 5-(dimethylAmino)naphthalene-1-sulfonyl chloride ou - sulfonamide) et prodan (N,N-dimethyl-6-propionyl-2-naphthylamine); les dérivés de coumarine tels que l'amino-coumarine, la 7-hydroxy-4méthyl-coumarine, la 7-amino-4méthyl-coumarine, et la méthyl-coumarine ; les dérivés d'oxadiazole tels que le pyridyloxazole, et le nitrobenzoxadiazole; les dérivés de pyrène tels que le marqueur cascade blue ; les dérivés d'oxazine tels que les marqueurs Nile red, et oxazine 170; et les dérivés d'arylméthine tels que l'auramine. Les marqueurs fluorescents non protéiques de l'invention incluent également les marqueurs commercialisés AlexaFluor, Fluoprobes, Dyelight, Seta, SeTau et SRFluor. Les marqueurs AlexaFluor sont ici particulièrement préférés ; ils incluent, sans limitation, les marqueurs AlexaFluor 350, 405, 430, 488, 500, 514, 532, 546, 568, 594, 610, 633, 647, 660, 680, 700, 750 et 790.

Le tableau 2 ci-après répertorie les marqueurs fluorescents non protéiques de l'invention, avec leurs longueurs d'onde d'excitation et d'émission.

**Tableau 2. Marqueurs fluorescents non protéiques selon l'invention**

| **Marqueur fluorescent non protéique** | **Longueur d'onde d'excitation (λex) à pH7 (nm)** | **Longueur d'onde d'émission (λem) à pH7 (nm)** | **Référence** |
|---|---|---|---|
| DiBAC | 490 | 516 | CAS#1779-25-5; Haupt *et al.,* 2014 |
| fluorescéine | 494 | 512 | CAS#2321-07-5 |
| FITC | 495 | 512 | CAS#3326-32-7 |
| rhodamine 110 | 496 | 520 | CAS#13558-31-1 |
| rhodamine 123 | 511 | 534 | CAS#62669-70-9 |
| rhodamine 5 GLD | 470 | 565 | Chemical Book #CB2116215 Pylam products company, Inc. |
| rhodamine 6G | 526 | 555 | CAS#989-38-8 |
| rhodamine B | 540 | 625 | CAS#81-88-9 |
| rhodamine B 200 | 523-557 | 595 | CAS#3520-42-1 |
| rhodamine B extra | 550 | 605 | CAS#81-88-9 |
| rhodamine BB | 540 | 580 | CAS#509-34-2 |
| rhodamine BG | 540 | 572 | CAS#12220-18-7 |
| rhodamine green | 502 | 527 | CAS#189200-71-3 |
| rhodamine red | 570 | 590 | ThermoFisher Scientific #S6366 |
| rhodamine *wt* | 530 | 555 | CAS#37299-86-8 |
| TRITC | 557 | 576 | CAS#80724-20-5 |
| 6-carboxyrhodamine 6G | 525 | 547 | Shanghai DiBai Chemicals Co., Ltd. |
| X-rhodamine | 580 | 605 | CAS # 198978-94-8 |
| oregon green 488 | 496 | 524 | CAS#195136-58-4 |
| oregon green 500 | 503 | 522 | Fritz *et al.,* 2009 |
| oregon green 514 | 511 | 530 | ThermoFisher Scientific #D7176 |
| Éosine Y | 525 | 545 | CAS#17372-87-1 |
| Texas red | 596 | 615 | CAS#82354-19-6 |
| indocarbocyanine (Cy3) | 550 | 570 | CAS#146397-20-8 |
| Cy3.18 | 554 | 568 | Mujumdar *et al.,* |
| | | | 1993 |
| indodicarbocyanine (Cy5) | 640 | 660 | CAS#146368-14-1 |
| Cy5.5 | 675 | 695-700 | CAS#172777-84-3 |
| Cy5.18 | 649 | 666 | Mujumdar *et al.,* 1993 |
| indotricarbocyanine (Cy7) | 710 | 805 | CAS#943298-08-6 |
| oxacarbocyanine (Cy2) | 494 | 512 | CAS#260430-02-2 |
| thiacarbocyanine | 545 | 570 | CAS#905-97-5 |
| mérocyanine | 530 | 580 | CAS#58823-12-4 |
| dérivés de squaraine | 630-670 | 650-700 | Cornellissen-Gude *et al.,* 1997 |
| Dansyl chloride | 340 | 578 | CAS#605-65-2 |
| prodan | 360 | 520 | CAS#70504-01-7 |
| amino-coumarine | 350 | 445 | CAS#19063-57-1 |
| 7-hydroxy-4méthyl-coumarine | 360 | 455 | Sherman *et al.,* 1968 |
| 7-amino-4méthyl-coumarine | 351 | 430 | CAS#26093-31-2 |
| méthylcoumarine | 384 | 469 | CAS#92-48-8 |
| pyridyloxazole | 410 | 550-570 | CAS#74718-16-4 |
| nitrobenzoxadidole | 460-470 | 510-650 | Herman, 2001 |
| cascade blue | 400 | 425 | CAS#61725-40-4 |
| Nile red | 515-530 | 525-605 | CAS#7385-67-3 |
| oxazine 170 | 625 | 550-580 | CAS#62669-60-7 |
| auramine | 460 | 550 | CAS#2465-27-2 |
| AlexaFluor 350 | 346 | 442 | CAS#244636-14-4 |
| AlexaFluor 405 | 401 | 421 | CAS#467233-94-9 |
| AlexaFluor 430 | 431 | 540 | ThermoFisher Scientific #A10169 |
| AlexaFluor 488 | 495-492 | 519-520 | CAS#247144-99-6 |
| AlexaFluor 500 | 503 | 525 | CAS#798557-08-1 |
| AlexaFluor 514 | 517 | 542 | CAS#798557-07-0 |
| AlexaFluor 532 | 531-532 | 553-554 | CAS#247145-11-5 |
| AlexaFluor 546 | 556-557 | 572-573 | CAS#247145-23-9 |
| AlexaFluor 568 | 577-578 | 603 | CAS#247145-38-6 |
| AlexaFluor 594 | 590-594 | 617-618 | CAS#247145-86-4 |
| AlexaFluor 610 | 610 | 629 | CAS#900528-62-3 |
| AlexaFluor 633 | 632 | 650 | CAS#477780-06-6 |
| AlexaFluor 647 | 647 | 666 | CAS#400051-23-2 |
| AlexaFluor 660 | 668 | 698 | CAS#422309-89-5 |
| AlexaFluor 680 | 679 | 702 | CAS#422309-67-9 |
| AlexaFluor 700 | 696 | 719 | CAS#697795-05-4 |
| AlexaFluor 750 | 752 | 776 | CAS#697795-06-5 |
| AlexaFluor 790 | 782 | 804 | CAS#950891-33-5 |

Les marqueurs fluorescents non protéiques particulièrement préférés selon l'invention sont AlexaFluor 647, Alexa Fluor 594, TRITC, FITC, et DiBAC, plus préférablement AlexaFluor 647, TRITC et DiBAC (qui a l'avantage de se lier à la membrane cellulaire), et encore plus préférablement AlexaFluor 647 et TRITC. En effet, le marqueur DiBAC a l'avantage de s'insérer spécifiquement dans la membrane plasmique de la cellule à paroi, sans nécessité de couplage à une autre molécule ; tandis que les marqueurs de type AlexaFluor et TRITC sont des fluorophores brillants ayant une bonne stabilité temporelle.

Tel qu'indiqué ci-dessus, le premier et le second marqueur luminescent doivent être sélectionnés de sorte que la longueur d'émission de leur radiation lumineuse soit distincte, ceci afin de pouvoir différentier la face externe de la face interne de la paroi à l'aide du dispositif optique de l'invention.

De manière préférée, un des marqueurs luminescents est sélectionné parmi la protéine fluorescente verte EGFP et le DiBAC, tandis que l'autre marqueur luminescent est sélectionné parmi AlexaFluor 647 et AlexaFluor 594, ces marqueurs ayant permis de différencier avec succès les deux faces de la paroi.

De manière encore préférée, le premier marqueur luminescent (i.e. marquant la face externe de la paroi) est sélectionné parmi la protéine fluorescente verte EGFP et le DiBAC, tandis que le second marqueur luminescent (i.e. marquant la face interne de la paroi) est sélectionné parmi AlexaFluor 647 et AlexaFluor 594, ces marqueurs ayant permis de différencier avec succès la face externe de la face interne de la paroi.

Une fois que la sélection des marqueurs de l'invention est opérée, le marquage de la paroi cellulaire peut être effectué de différentes manières selon la nature desdits marqueurs : en modifiant génétiquement la cellule de sorte que celle-ci exprime par exemple une protéine fluorescente de l'invention sur l'une ou l'autre des faces de sa paroi, et/ou en conjuguant l'un des marqueurs luminescents de l'invention (de nature protéique ou non protéique) à une molécule capable de se lier à l'une ou l'autre face de la paroi, à une molécule faisant partie intégrante de ladite face, voire même en utilisant un marqueur capable de s'ancrer directement dans l'une ou l'autre face de sa paroi.

L'homme du métier est à même de réaliser ce type de marquage, à l'aide de techniques bien connues de biologie moléculaire et/ou de conjugaison physicochimique (Sambrook *et al.,* 2012; Wong *et al.,* 2011; Hermanson, 2013).

Selon un mode de réalisation préféré, le premier marqueur luminescent est couplé à une molécule capable de se lier à la face externe de la paroi cellulaire.

Par « couplé », ou « conjugué », on entend ici que le marqueur luminescent est lié à ladite molécule, de manière directe ou indirecte, par tout moyen approprié, par exemple par tout moyen biologique ou physicochimique. Cette liaison est en outre préférablement covalente, de sorte que la liaison entre ledit marqueur et ladite molécule confère un marquage stable pour imager la cellule.

Si le marqueur luminescent, en particulier fluorescent, et ladite molécule sont tous deux de nature protéique, ledit marqueur peut être préférablement directement lié à ladite molécule, en formant par exemple une protéine de fusion avec ladite molécule. Une telle protéine de fusion peut être produite par des techniques d'ingénierie par recombinaison et des techniques d'expression dans des microorganismes appropriés (Sambrook *et al.,* 2012).

De manière alternative, et ce quel que soit la nature protéique ou non protéique du marqueur et/ou de ladite molécule, ledit marqueur pourra être lié de manière indirecte à ladite molécule, par exemple par l'intermédiaire d'un « espaceur ». Par « espaceur », on entend ici tout agent chimique ou biologique, naturel ou synthétique, capable de coupler deux molécules entre elles. Les espaceurs dits chimiques sont bien connus de l'homme du métier, et sont typiquement des chaînes de polymères de longueur variée, comprenant des groupes réactifs et au moins un atome, préférablement au moins un atome de carbone. Les espaceurs dits biologiques sont quant à eux typiquement des séquences d'acides nucléiques et/ou d'acides aminés de longueur variée, comprenant au moins un acide nucléique et/ou un acide aminé. Ces espaceurs, et les méthodes de couplage ont été décrites de manière extensive dans la littérature, notamment par Chen *et al.* (2013) ainsi que dans Thermo Scientific: Crosslinking Technical Handbook (2015).

Par « molécule capable de se lier à la face externe de la paroi cellulaire », on entend désigner ici toute molécule, naturelle ou synthétique, qui présente une affinité pour la face externe de la paroi cellulaire et est donc capable de se lier à celle-ci. L'affinité d'une molécule envers une cible d'intérêt peut être évaluée en mesurant la constante de dissociation Kd et/ou la constante d'association Ka tel que notamment décrit par Wild (2013).

De manière préférée, la molécule capable de se lier à la face externe de la paroi cellulaire est une lectine. Les lectines sont des protéines qui se lient spécifiquement à certaines structures oligosaccharidiques (Horisberger *et al.,* 1985). Les Inventeurs ont ici découvert que de telles lectines peuvent être utilisées pour lier le premier marqueur luminescent de l'invention aux polysaccharides, et/ou aux peptides/protéines glycosylé(e)s présents dans la paroi cellulaire de la cellule étudiée.

Des exemples de lectines pouvant être utilisées dans le contexte de la présente invention, incluent, sans limitation, les lectines se liant spécifiquement aux motifs de type galactose et/ou à la N-acétylgalactosamine telles que les lectines GS-I (lectines de *Griffonia simplicifolia* incluant GS-IB4, GS-IA4, GS-IA3B, GS-IA2B2, et GS-IAB3), RCA (également connue sous le nom de ricine, phytoagglutinine, toxoalbumine ou RCA120), PNA (lectine d'arachide), SBA (lectine de soja), DBA (lectine de Dolichos), MPA (lectine d'oranger des osages), AIL (Jacaline), BPA (lectine d'arbre d'orchidée), et WL (lectine de vesce velue); les lectines se liant spécifiquement à l'acide sialique et/ou à la N-acétylglucosamine telles que les lectines WGA (lectine du blé), GS-II (lectine de *Griffonia simplicifolia*), SNA (lectine du sureau), et MAL (lectine de *Maackia amurensis*); les lectines se liant spécifiquement au mannose telles que les lectines ConA (Concanavaline A), LCH (lectine de lentille), et GNA (lectine de perce-neige) ; et les lectines se liant spécifiquement au fucose telles que les lectines UEA (lectine de l'ajonc), et AAL (lectine *d'Aleuria aurantia*). Ces lectines sont disponibles dans le commerce, optionnellement liées à un marqueur fluorescent qui est de nature non protéique, tels que ceux décrits dans le tableau 2 ci-dessus (e.g. AlexaFluor, FluoProbes, etc).

Le tableau 3 ci-après répertorie les lectines de l'invention, et leurs propriétés.

**Tableau 3. Lectines selon l'invention**

| **Lectine** | **Organisme d'origine** | **Motif du ligand préféré** | **Référence** |
|---|---|---|---|
| **Affinité pour les motifs de type galactose et/ou N-acétylgalactosamine** | | | |
| GS-IB4 | *Griffonia simplicifolia* | α-D-galactosyl | Sigma Aldrich #L2380 (*); ThermoFisher Scientific #132450 (*) |
| GS-IA4 | *Griffonia simplicifolia* | N-acetyl-D-galactosamine | Wu *et al*., 1996 (*) |
| GS-IA3B | *Griffonia simplicifolia* | N-acetyl-D-galactosamine; α-D-galactosyl | voir ci-dessus (*) |
| GS-IA2B2 | *Griffonia simplicifolia* | N-acetyl-D-galactosamine; α-D-galactosyl | voir ci-dessus (*) |
| GS-IAB3 | *Griffonia simplicifolia* | résidus α-D-galactosyl ; N-acetyl-D-galactosamine | voir ci-dessus (*) |
| RCA | *Ricinus communis* | Galβ1-4GlcNAcβ1-R | Sigma Aldrich #L7886 |
| PNA | *Arachis hypogaea* | Galβ1-3GalNAcα1-Ser/Thr | Chacko *et al.,* 2001 |
| SBA | *Glycine max* | N-acetyl-D -galactosamine | Sigma Aldrich #L2650 |
| DBA | *Dolichos Biflorus* | N-acetyl-D-galactosamine | Hormia *et al.*,1988 |
| MPA | *Maclura pomifera* | alpha-galactose | Kresch *et al.,* 1991 |
| AIL | *Artocarpus integrifolia* | (Sia)Galβ1-3GalNAcα1-Ser/Thr | Sastry *et al.,* 1986 |
| BPA | *Bauhinia purpurea* | N-acetyl-D-galactosamine and D-galactose | Sigma Aldrich #L6013 |
| VVL | *Vicia villosa* | GalNAcα-Ser/Thr | Vector Laboratories #B-1235 |

| **Affinité pour les motifs de type acide sialique et/ou N-acétylglucosamine** | | | |
|---|---|---|---|
| WGA | *Triticum vulgaris* | GlcNAcβ1-4GlcNAcβ1-4GlcNAc; Neu5Ac (acide sialique) | Sigma Aldrich #L9640 |
| GS-II | *Griffonia simplicifolia* | N-acetylglucosamine | Zhu *et al*., 1996 |
| SNA | *Sambucus nigra* | Neu5Acα2-6Gal(NAc)-R | Sigma Aldrich #L6890 |
| MAL | *Maackia amurensis* | Neu5Ac/Gcα2-3Galβ1-4GlcNAcβ1-R | Sigma Aldrich #L8025 |

| **Affinité pour les motifs de type mannose** | | | |
|---|---|---|---|
| ConA | *Canavalia ensiformis* | α-D-mannosyl *et* α-D-glucosyl ; structures ramifiées d'α-mannosyl (type riche en α-mannose, ou type hybride et biantennaire de N-Glycans complexes) | Sigma Aldrich #C2272 |
| LCH | *Lens culinaris* | région de base fucosylée des N-Glycans complexes bi- et tri-antennaires | Sigma Aldrich #L9267 |
| GNA | *Galanthus nivalis* | Mannose | Barre *et al.,*2001 |

| **Affinité pour les motifs de type fucose** | | | |
|---|---|---|---|
| EAU | *Ulex europaeus* | Fucα1-2Gal-R | Vector Laboratories #B-1065 |
| AAL | *Aleuria aurantia* | Fucα1-2Galβ1-4(Fucα1-3/4)Galβ1-4GlcNAc; R2-GlcNAcβ1-4(Fucα1-6)GlcNAc-R1 | Fujihashi et *al*.,2003 |

Les lectines citées dans le tableau 3 ci-dessus peuvent se lier à la paroi cellulaire de tout type de cellule à paroi choisie dans le groupe des champignons, des bactéries, des archées, des plantes et des algues, selon le type de motifs de sucre présent à la surface de ladite cellule.

Les lectines particulièrement préférées selon l'invention sont les lectines GS-IB4 et WGA, pour lesquelles le marquage de la face externe de la paroi a été réalisé avec succès par les Inventeurs pour les cellules de champignons tels que *Schyzosaccharomyces pombe* et *Candida albicans,* respectivement.

De manière encore préférée, le premier marqueur luminescent est le marqueur fluorescent AlexaFluor 647 couplé à la lectine GS-IB4, ou le marqueur fluorescent AlexaFluor 594 couplé à la lectine WGA, pour lesquels le marquage de la face externe de la paroi a été réalisé avec succès par les Inventeurs pour les cellules champignons tels que *Schyzosaccharomyces pombe* et *Candida albicans,* respectivement.

Le premier marqueur luminescent peut être préférablement apporté à la cellule de manière externe à ladite cellule, lorsque celui-ci est couplé à une molécule capable de se lier à la face externe de la paroi cellulaire. Ainsi, la cellule à imager n'a pas à être génétiquement modifiée pour exprimer ledit premier marqueur.

Pour ce faire, la cellule à paroi est préférablement placée dans un dispositif de culture comprenant le premier marqueur luminescent. De manière encore préférée, ledit dispositif est préférablement alimenté en continu avec ledit premier marqueur luminescent.

Ce dispositif de culture peut être par exemple une plaque d'agar, c'est-à-dire un milieu de culture cellulaire gélosé, contenant le premier marqueur luminescent ; ou une chambre microfluidique dans laquelle est apporté, préférablement en continu, un milieu de culture cellulaire contenant le premier marqueur luminescent. Ces dispositifs de culture sont bien connus de l'homme du métier (Weibel *et al.,* 2007; Charvin *et al.,* 2008).

Un dispositif de culture particulièrement préféré selon l'invention est la chambre microfluidique. Celle-ci permet en effet un approvisionnement constant du marqueur luminescent de l'invention lorsque celui-ci est couplé à une molécule capable de se lier à la face externe de la paroi, et par conséquent d'observer la radiation lumineuse dudit marqueur sur une longue période de temps.

La concentration du premier marqueur luminescent de l'invention dans le milieu de culture dudit dispositif peut être préférablement comprise entre environ 0,10 µglmL et environ 100 µglmL, plus préférablement entre environ 0,25 µglmL et environ 50 µglmL, plus préférablement entre environ 0,50 µglmL et environ 25 µglmL, et encore plus préférablement entre environ 1 µglmL et environ 10 µglmL. De manière préférée entre toutes, ladite concentration du premier marqueur luminescent dans ledit milieu est d'environ 5 µg/mL.

Selon un mode de réalisation préféré, le second marqueur luminescent (i.e. marquant la face interne de la paroi) est couplé à une protéine de la membrane cellulaire, ou à une molécule capable de se lier à la membrane cellulaire, ou est capable de se lier à la membrane cellulaire.

Les définitions données ci-avant concernant le couplage de molécules s'appliquent pour le second marqueur luminescent *mutatis mutandis.*

Par « membrane cellulaire », on entend désigner ici la structure cellulaire constituée de lipides qui sépare le milieu intracellulaire de la paroi cellulaire, et qui est généralement juxtaposée à cette dernière. Cette membrane est plus connue sous le nom de membrane plasmique chez les champignons, archées, plantes et bactéries, sauf chez les bactéries Gram négatives où elle est qualifiée de membrane interne. Il est entendu que ce terme se réfère ici à la membrane cellulaire de la cellule à imager.

Par « protéine de la membrane cellulaire », on entend désigner ici toute protéine faisant naturellement partie intégrante de ladite membrane.

Dans le cadre de la présente invention, la protéine de la membrane cellulaire est préférablement sélectionnée dans le groupe constituée par les protéines membranaires de champignons telles que Psy1, Pma1, Syb1, Pom1, Mod5 et leurs homologues ; les protéines membranaires des bactéries telles que PhoE, ScryY, BtuB, FhuA, OmpA, OmpT, NalP, OmPIA, FadL et leurs homologues ; les protéines membranaires d'archées telles que Rho, ArtA, Sec11a, Sec11b, FtsY et leurs homologues; les protéines membranaires de plantes telles que BP-80 (VSR1), PRK1, PRK2, SCAMPs (e.g. SCAMP1) et leurs homologues; et les protéines membranaires d'algues telles que Toc159, prostaglandines (e.g. PGE2) et leurs homologues.

Par « homologue », on entend ici une protéine présentant une homologie de structure. L'homme du métier est à même d'identifier les homologues des protéines susmentionnées, en fonction de l'espèce cellulaire imagée, en effectuant par exemple une recherche d'homologie de séquence.

Le tableau 4 ci-après répertorie les protéines membranaires de l'invention.

**Tableau 4. Protéines membranaires selon l'invention**

| **Cellule de l'invention** | **Protéine membranaire** | **Exemples de Référence (UniProtKB; espèce cellulaire)** |
|---|---|---|
| champignons | Psy1 | Q9USH7 (*Schyzosaccharomyces pombe*) |
| | Pma1 | P09627 (*Schyzosaccharomyces pombe*) |
| | Syb1 | Q92356 (*Schyzosaccharomyces pombe*) |
| | Pom1 | Q09690 *(Schyzosaccharomyces pombe)* |
| | Mod5 | O59740 (*Schyzosaccharomyces pombe*) |
| bactéries | PhoE | Q01605 (*Citrobacter freundii*) |
| | ScrY | W9B4Y7 (*Klebsiella pneumoniae*) |
| | BtuB | O52903 (*Citrobacter freundii*) |
| | FhuA | R4Y5U8 (*Klebsiella pneumoniae*) |
| | OmpA | K0BWP3 *(Pasteurella multocida)* |
| | OmpT | A0A0K0PL05 (*Escherichia coli*) |
| | OmPIA | Q9Z4N8 (*Enterobacter agglomerans*) |
| | FadL | B3G3J3 (*Vibrio alginolyticus*) |
| archées | Rho | B7A688 (*Thermus aquaticus*) |
| | ArtA | D4GUZ4 (*Haloferax volcanii*) |
| | Sec11a | D4GUC5 *(Haloferax volcanii)* |
| | Sec11b | D4GYJ8 *(Haloferax volcanii)* |
| | FtsY | P83749 (*Thermus aquaticus*) |
| plantes | BP-80 (VSR1) | P93026 (*Arabidopsis thaliana*) |
| | PRK1 | C0LGU0 (*Arabidopsis thaliana*) |
| | PRK2 | Q84JQ4 (*Arabidopsis thaliana*) |
| | SCAMP1 | Q9SKT3 (*Arabidopsis thaliana*) |
| algues | Toc159 | *-* (*Laminaria japonica*) |
| | PGE2 | *- (Laminaria japonica*) |

La protéine membranaire particulièrement préférée selon l'invention est la protéine Psy1 et ses homologues, le marquage de la membrane cellulaire ayant été réalisé avec succès par les Inventeurs avec cette protéine pour les cellules de champignons tels que *Schyzosaccharomyces pombe.*

L'homme du métier comprendra aisément que, lorsqu'une protéine membranaire est utilisée pour le marquage de la face interne de la paroi, le second marqueur luminescent est préférablement une protéine fluorescente, telle que décrite ci-dessus. Ledit marqueur et ladite protéine membranaire peuvent ainsi être préférablement sous la forme d'une protéine de fusion, qui peut être produite par des techniques d'ingénierie par recombinaison bien connues dans l'art, puis exprimée directement dans la cellule de l'invention par des techniques d'expression conventionnelles (Sambrook *et al.,* 2012). Selon ce mode de réalisation, la cellule de l'invention est ainsi génétiquement modifiée avec ladite protéine de fusion.

De manière encore préférée, le second marqueur luminescent est la protéine fluorescente EGFP couplée à la protéine Psy1 ou à l'un de ses homologues, ou la protéine fluorescente mCherry couplée à la protéine Psy1 ou à l'un de ces homologues, le marquage de la membrane cellulaire ayant été réalisé avec succès par les Inventeurs pour les cellules de champignons tels que *Schyzoaccharomyces pombe.* Les Inventeurs ont en effet observé que ces marqueurs luminescents émettent une radiation lumineuse forte et homogène, facile à imager. De manière préférée entre toutes, le second marqueur luminescent est la protéine fluorescente GFP couplée à la protéine Psy1, en particulier pour imager les cellules de champignons tels que *Schyzosaccharomyces pombe.*

De manière alternative, tel qu'indiqué ci-dessus, le second marqueur luminescent peut être couplé à une molécule capable de se lier à la membrane cellulaire.

Par « molécule capable de se lier à la membrane cellulaire », on entend désigner ici toute molécule, naturelle ou synthétique, qui présente une affinité pour la membrane cellulaire et est donc capable de se lier à celle-ci.

De manière préférée, la molécule capable de se lier à la membrane cellulaire est un polypeptide comprenant ou consistant en au moins un domaine de liaison aux lipides. Ces domaines de liaison aux lipides sont en effet hydrophobes et chargés, et peuvent donc s'ancrer directement dans les lipides de la membrane.

Des exemples de domaine de liaison aux lipides pouvant être préférablement utilisés dans le cadre de la présente invention, incluent, sans limitation, les domaines CaaX (où a est un acide aliphatique et X est n'importe quel acide aminé) (SEQ ID NO :1) tel que le domaine de séquence SEQ ID NO :2 , les domaines de myristoylation tels que le domaine de séquence SEQ ID NO :3, les domaines PH (« Pleckstrin homology ») tels que ceux de référence Pfam PF00169, les domaines BAR (Bin1/Amphiphysin/Rsv167) tels que ceux de référence Pfam PF03114, les domaines FYVE (Fab1, YOTB, Vac1, EEA1) tels que ceux de référence Pfam PF01363, les domaines PX (se liant aux phosphoinositides) tels que ceux de référence Pfam PF00787, et les domaines ENTH (« Epsin N-Terminal Homology ») tels que ceux de référence Pfam PF01417. L'homme du métier est à même d'identifier les polypeptides comprenant ces domaines de liaison, par exemple à l'aide de la base de données Pfam, et/ou de la base de données CGDB, toutes deux disponibles sur internet (Hurley et al., 2000).

Le tableau 5 ci-après répertorie les domaines de liaison aux lipides de l'invention.

**Tableau 5. Domaines de liaison aux lipides selon l'invention**

| **Exemples de domaine de liaison aux lipides** | **Exemples de protéine contenant ce domaine** | **Référence (Pfam)** | **Cellule de l'invention** |
|---|---|---|---|
| **CaaX (SEQ ID NO:1)** | | | |
| SEQ ID NO:2 | Cdc42 | - | champignons, plantes, algues |

| **myristoylation** | | | |
|---|---|---|---|
| SEQ ID NO:3 | MARCKS | - | champignons, plantes, algues, bactéries |

| **PH** | | | |
|---|---|---|---|
| - | Bem2 | PF00169 | champignons, plantes,algues, Bactéries |

| **BAR** | | | |
|---|---|---|---|
| - | Cdc15 | PF03114 | champignon, plantes, algues |

| **Exemples de domaine de liaison aux lipides** | **Exemples de protéine contenant ce domaine** | **Référence (Pfam)** | **Cellule de l'invention** |
|---|---|---|---|
| **FYVE** | | | |
| - | ZFYVE1 | PF01363 | champignons, plantes, algues, bactéries, archées |

| **PX** | | | |
|---|---|---|---|
| - | NCF1 | PF00787 | champignons, plantes, algues |

| **ENTH** | | | |
|---|---|---|---|
| - | EPN1 | PF01417 | champignons, plantes, algues |

Le domaine de liaison particulièrement préféré selon l'invention est le domaine de liaison CaaX, le marquage de la face interne de la paroi ayant été réalisé avec succès par les Inventeurs avec un polypeptide comprenant ce domaine pour les cellules de champignons tels que *Candida albicans,* en particulier avec le polypeptide Rac1.

L'homme du métier comprendra aisément que, lorsqu'un polypeptide comprenant ou consistant en au moins un domaine de liaison aux lipides est utilisé pour le marquage de la face interne de la paroi, le second marqueur luminescent est préférablement une protéine fluorescente, telle que décrite ci-dessus. Ledit marqueur et ledit polypeptide peuvent ainsi être préférablement sous la forme d'une protéine de fusion, qui peut être produite par des techniques d'ingénierie par recombinaison bien connues dans l'art, puis exprimée directement dans la cellule de l'invention par des techniques d'expression conventionnelles (Sambrook *et al.,* 2012). Selon ce mode de réalisation, la cellule de l'invention est ainsi génétiquement modifiée avec ladite protéine de fusion.

De manière encore préférée, le second marqueur luminescent est la protéine fluorescente EGFP couplée au domaine C-terminal de la protéine Rac1 (i.e. CtRac1, de séquence SEQ ID NO :4), le marquage de la face interne de la paroi ayant été réalisé avec succès par les Inventeurs pour les cellules de champignons tels que *Candida albicans.*

De manière encore alternative, tel qu'indiqué ci-dessus, le second marqueur luminescent peut être capable de se lier à la membrane cellulaire.

En d'autres termes, un tel marqueur ne nécessite pas d'être couplé à une quelconque autre molécule pour se lier à la membrane cellulaire. Des exemples de marqueurs luminescents capables de se lier à la membrane cellulaire incluent, sans limitation, le DiBAc (bis-(1,3-dibutylbarbituric acid) trimethine oxonol) et ses dérivés tels que décrits dans le tableau 2 ci-dessus.

Le second marqueur luminescent peut être préférablement apporté à la cellule de manière externe à ladite cellule, lorsque celui-ci est capable de se lier lui-même à la membrane cellulaire. Ainsi, la cellule à imager n'a pas à être génétiquement modifiée pour exprimer ledit second marqueur.

Pour ce faire, la cellule à paroi est préférablement placée dans un dispositif de culture comprenant le second marqueur luminescent. De manière encore préférée, ledit dispositif est préférablement alimenté en continu avec ledit second marqueur luminescent.

Ce dispositif de culture peut être par exemple une plaque d'agar, c'est-à-dire un milieu de culture cellulaire gélosé, contenant le second marqueur luminescent ; ou une chambre microfluidique dans laquelle est apporté, préférablement en continu, un milieu de culture cellulaire contenant le second marqueur luminescent.

Un dispositif de culture particulièrement préféré selon l'invention est la chambre microfluidique. Celle-ci permet en effet un approvisionnement constant du marqueur luminescent de l'invention lorsque celui-ci est capable de se lier lui-même à la face interne de la paroi, et par conséquent d'observer la radiation lumineuse dudit marqueur sur une longue période de temps.

La concentration du second marqueur luminescent de l'invention dans le milieu de culture dudit dispositif peut être préférablement comprise entre environ 0,05 µglmL et environ 500 µglmL, plus préférablement entre environ 0,5 µglmL et environ 50 µglmL, plus préférablement entre environ 1 µglmL et environ 5 µg/mL. De manière préférée entre toutes, ladite concentration du premier marqueur luminescent dans ledit milieu est d'environ 2,5 µg/mL.

Selon un mode de réalisation préféré, le premier et le second marqueur luminescent sont apportés à la cellule de manière externe à ladite cellule, lorsque ceux-ci sont respectivement couplés à une molécule capable de se lier à la face externe de la paroi et capable de se lier directement à la membrane cellulaire.

Selon un mode de réalisation particulièrement préféré de l'invention : la cellule à paroi est un champignon, préférablement *Schyzosaccharomyces pombe* ou *Candida albicans* ; le premier marqueur luminescent (i.e. marquant la face externe de la paroi) est un marqueur fluorescent couplé à une lectine, préférablement AlexaFluor 647 couplé à la lectine GS-IB4 ou AlexaFluor 594 couplé à la lectine GS-IB4 ; et le second marqueur luminescent (i.e. marquant la face interne de la paroi) est un marqueur fluorescent couplé à une lectine, préférablement la protéine fluorescente EGFP couplée à Psy1 ou à CtRac1.

Par exemple, la cellule à paroi est *Schyzosaccharomyces pombe* ; le premier marqueur luminescent est AlexaFluor 647 couplé à la lectine GS-IB4 ; et le second marqueur luminescent est la protéine fluorescente EGFP couplée à Psy1.

Alternativement, la cellule à paroi est *Candida albicans* ; le premier marqueur luminescent est AlexaFluor 594 couplé à la lectine GS-IB4 ; et le second marqueur luminescent est la protéine fluorescente EGFP couplée à CtRac1.

L'analyse de l'image de la cellule à paroi obtenue par le dispositif optique à haute-résolution peut être effectuée en détectant la radiation lumineuse émise par les marqueurs de l'invention, en chaque point du contour de la cellule.

Ainsi selon un mode de réalisation préféré, l'étape c) de détermination de la distance entre le premier marqueur et le second marqueur comprend :
i) détecter, dans une direction perpendiculaire à la tangente à la paroi cellulaire en un point de ladite paroi, un premier maximum de radiation lumineuse dans ladite première gamme de longueur d'onde et un second maximum de radiation lumineuse dans ladite seconde gamme de longueur d'onde, la distance entre le premier et le second marqueur en ce point étant définie comme la distance entre le premier et le second maximum de radiation lumineuse ; et
ii) optionnellement, répéter l'étape i) en une pluralité de points de la paroi cellulaire.

A cet effet, en chaque point du contour de la cellule correspondant à un pixel, est définie la tangente au contour de la cellule ainsi que la direction perpendiculaire à ladite tangente.

Pour chacune des deux gammes de longueur d'onde émises par les marqueurs de l'invention, l'intensité de la radiation lumineuse dans la gamme de longueur d'onde est mesurée le long d'un segment ayant une direction perpendiculaire à ladite tangente. Le segment a une taille modulable, mais qui est généralement fixée à 4 µm (93 px).

Pour détecter un maximum de l'intensité de la radiation lumineuse dans la gamme de longueur d'onde, l'intensité de la radiation lumineuse dans la gamme de longueur d'onde est préférablement modélisée sous la forme d'une gaussienne. Le maximum de radiation lumineuse dans la gamme de longueur d'onde est défini comme le maximum de la gaussienne. Les première et seconde gammes de longueur d'onde peuvent par exemple être celles telles que définies ci-dessus.

L'épaisseur de la paroi locale, qui correspond à la distance entre le premier et le second marqueur en ce point est définie comme la distance entre le premier et le second maximum de radiation lumineuse.

Le procédé d'analyse d'image permet ainsi une mesure de l'épaisseur de la paroi résolue au pixel près, c'est-à-dire avec une précision de plus ou moins 10 nm.

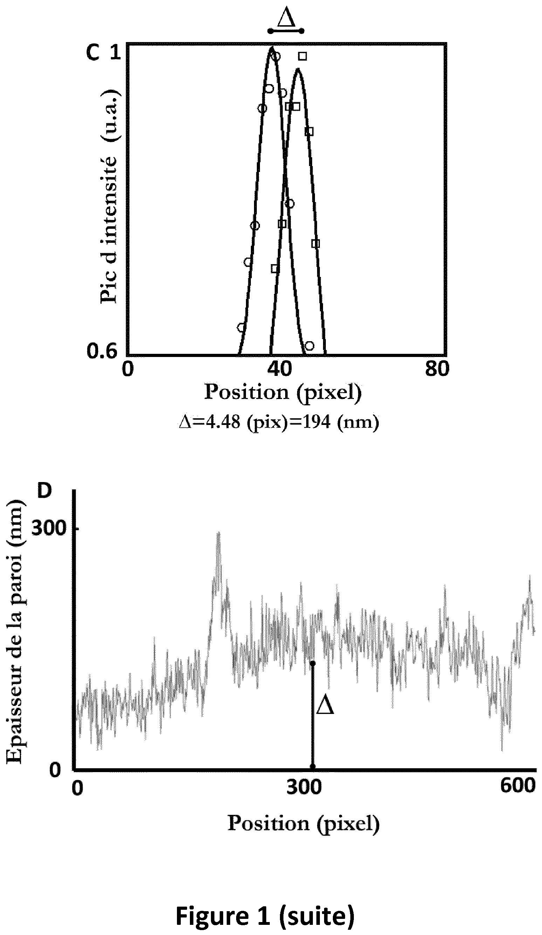

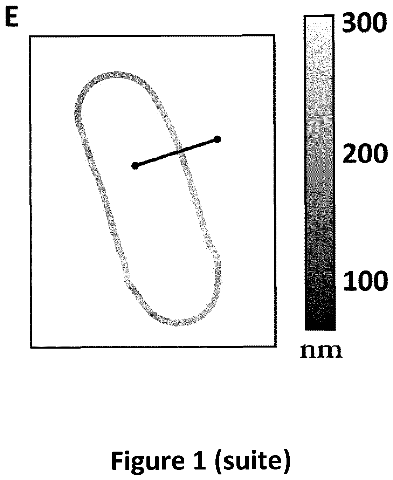

L'étape i) peut être répétée en une pluralité de points de la paroi cellulaire ; en particulier l'étape i) peut être répétée en chaque pixel de l'image correspondant au contour de la cellule. Ceci permet de déterminer l'épaisseur de la paroi en fonction de la position autour de la cellule qui peut être représentée sur un graphique (Figure 1D) ou par le biais d'une carte couleur (Figure 1E).

Il est possible d'effectuer des mesures moyennées sur une partie de la cellule et moyennant l'épaisseur mesurée sur une section du contour de la cellule. Cette étape de mesure d'une moyenne permet de supprimer les erreurs de mesure locales.

Du fait d'aberrations chromatiques associées à tous les systèmes de microscopie optique à haute-résolution, en particulier à fluorescence, les images venant de la ligne correspondant à la radiation lumineuse du premier marqueur et de la ligne correspondant à la radiation lumineuse du second marqueur ne sont généralement pas exactement alignées. Cet effet crée des décalages qui peuvent donner lieu à des asymétries dans la carte d'épaisseur de la paroi qui ne correspondent pas à la réalité biologique.

Les déformations et en particulier les aberrations chromatiques qui peuvent créer des décalages dans le plan ou en profondeur des deux signaux peuvent être compensées par une étape de calibration. Cette étape de calibration peut comprendre les étapes suivantes :
a) imager un élément ponctuel irradiant dans plusieurs longueurs d'onde connues ;
β) analyser les radiations détectée dans ces longueurs d'onde pour définir une carte des déformations ; et
γ) compenser ces déformations dans les images acquises.

L'étape a) peut en particulier consister à imager un élément d'une taille inférieure au pixel tel qu'une bille d'un diamètre de 0,2 µm irradiant dans plusieurs longueurs d'onde connues (par exemple bleu, vert, rouge et infrarouge).

L'étape a) peut également consister à imager une cellule marquée avec deux marqueurs luminescents émettant une radiation de longueur d'onde différente, en particulier à l'aide de marqueurs luminescents couplés à des molécules capables de se lier à la face externe de la paroi cellulaire, tels que des marqueurs fluorescents distincts couplés à une lectine.

L'étape β) d'analyse des radiations détectée permet plus précisément d'établir une carte des déformations optiques. En effet, les signaux aux différentes longueurs d'onde devraient, par construction, être parfaitement alignés, puisqu'ils émanent du même point. La déformation optique en un point est définie comme le décalage entre les signaux détectés aux différentes longueurs d'onde. Le décalage moyen en chaque point est mesuré sur un certain nombre de mesure (par exemple, 20).

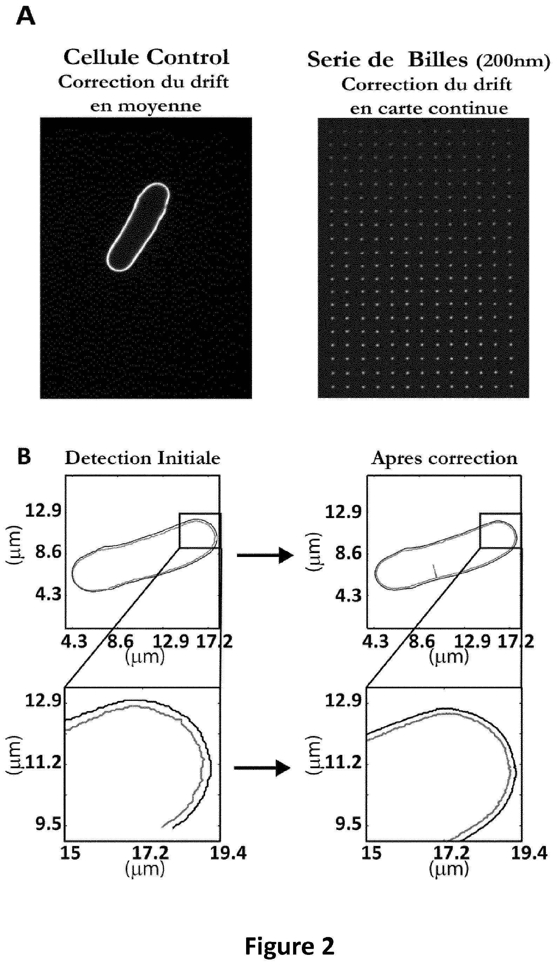

Au cours de l'étape γ) la carte des déformations optiques définie à l'étape β) peut être utilisée pour corriger les images acquises et donc les mesures d'épaisseur. Les mesures d'épaisseur de paroi sont ainsi corrigées en fonction du décalage mesuré à l'étape β) (Figures 2A et 2B).

Selon un mode de réalisation préféré, les différentes étapes de l'analyse d'image du procédé de l'invention sont exécutées au moyen d'instructions de code de programme.

En conséquence, un autre aspect de l'invention porte sur un produit programme d'ordinateur, ce programme étant susceptible d'être mis en œuvre dans les moyens de traitement ou un système informatique, ce programme comportant des instructions de code adaptées à la mise en œuvre d'un procédé selon l'invention tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable. L'invention vise aussi un support d'informations lisible par un ordinateur, et comportant des instructions d'un programme d'ordinateur tel que mentionné ci-dessus. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou un autre moyen d'enregistrement. D'autre part, le support d'informations peut être un support transmissible tel qu'un signal électrique ou optique, qui peut être acheminé via un câble électrique ou optique, par radio ou par d'autres moyens. Alternativement, le support d'informations peut être un circuit intégré dans lequel le programme est incorporé, le circuit étant adapté pour exécuter ou pour être utilisé dans l'exécution du procédé en question.

Le procédé de l'invention peut être mis en œuvre pour étudier la physiologie de la cellule à paroi. Il est en effet bien connu de l'homme du métier que l'épaisseur de la paroi reflète la viabilité de la cellule, et conditionne sa croissance, son homéostasie ainsi que sa polarité (Davi *et al.,* 2015).

Ainsi, selon un autre aspect, l'invention porte sur un procédé *in vitro* pour évaluer en temps réel la viabilité cellulaire, la synthèse de la paroi cellulaire, la morphogénèse cellulaire, l'homéostasie de la paroi cellulaire et/ou la polarité de cellules à paroi, comprenant:
a) mesurer en temps réel l'épaisseur de la paroi cellulaire d'au moins une cellule isolée selon le procédé de l'invention tel que décrit ci-dessus; et
b) évaluer la viabilité cellulaire, la synthèse de la paroi cellulaire, la morphogénèse cellulaire, l'homéostasie de la paroi cellulaire et/ou la polarité de ladite cellule, en fonction de l'épaisseur de la paroi cellulaire mesurée à l'étape a).

Le terme « viabilité cellulaire » signifie ici la capacité de la cellule à se diviser dans des conditions de culture *in vitro.* Ainsi, une épaisseur de la paroi trop faible, par exemple inférieure à 20% de la valeur normale, ou trop importante, par exemple supérieure à 300% de la valeur normale, mesurée en un seul point ou plusieurs points du contour de la cellule est indicative d'une faible viabilité de la cellule.

Lorsque la cellule imagée est vivante, la synthèse de sa paroi, sa morphogénèse, l'homéostasie de la paroi et/ou sa polarité peuvent être étudiées grâce au procédé de l'invention.

Par « synthèse de la paroi cellulaire », on entend désigner ici le processus physiologique par lequel se forme et évolue la paroi cellulaire d'une cellule à paroi, lors de la croissance de ladite cellule. Les Inventeurs ont en effet observé la formation de la paroi en temps réel chez des cellules sphéroplastées (i.e. sans paroi), et ce sur plusieurs heures, grâce au procédé de mesure de l'épaisseur de la paroi selon l'invention.

Par « morphogénèse cellulaire », on entend désigner ici le processus physiologique de développement d'une cellule dans le temps. Ce phénomène recouvre, entre autres, la croissance cellulaire et la division cellulaire. Les Inventeurs ont en effet démontré qu'il était possible d'observer les variations spatio-temporelles de l'épaisseur de la paroi d'une cellule vivante, et de suivre ainsi dans le temps la croissance de cette dernière ainsi que sa division, grâce au procédé de mesure de l'épaisseur de la paroi selon l'invention.

Par « homéostasie de la paroi cellulaire », on entend désigner ici le processus physiologique permettant de maintenir l'épaisseur moyenne de la paroi de la cellule constante.

La « polarité cellulaire » désigne quant à elle les différences spatiales dans la forme et la structure d'une cellule. Ainsi, une épaisseur locale de la paroi de 50% de la valeur normale est indicative de default de polarité et par conséquent de sécrétion vectorielle de matériel dans la paroi.

Le procédé de l'invention peut être également mis en oeuvre pour identifier des cellules à paroi résistantes à un agent ou combinaison d'agents capables de modifier l'épaisseur de la paroi cellulaire. Le procédé de l'invention permet ainsi d'identifier plus particulièrement la résistance à des antibiotiques, phénomène qui est responsable de milliers de morts chaque année.

Ainsi, selon un autre aspect, l'invention concerne un procédé *in vitro* pour déterminer la résistance de cellules à paroi envers un agent ou combinaison d'agents capables de modifier l'épaisseur de la paroi cellulaire, comprenant :
a) mesurer en temps réel l'épaisseur de la paroi cellulaire d'au moins une cellule isolée selon le procédé de l'invention tel que décrit ci-dessus, en présence d'un agent ou combinaison d'agents capables de modifier l'épaisseur de la paroi cellulaire et optionnellement en absence dudit agent ou de ladite combinaison d'agents ;
b) déterminer si l'épaisseur de la paroi cellulaire est modifiée par ledit agent ou ladite combinaison d'agents ; et
c) optionnellement, déterminer la résistance de la cellule envers l'agent ou combinaison d'agents capables de modifier l'épaisseur de la paroi cellulaire.

En particulier, la non-modification de l'épaisseur de la paroi de la cellule est indicative que la cellule est résistante audit agent ou combinaison d'agents, tandis que la modification de l'épaisseur de la paroi de ladite cellule est indicative que la cellule est sensible, et donc non-résistante, audit agent ou combinaison d'agents.

Dans le contexte de la présente invention, la résistance est plus particulièrement évaluée envers des agents capables de diminuer l'épaisseur de ladite paroi, et encore plus avantageusement pour une cellule à paroi pathogène, telle qu'une cellule de bactérie ou une cellule de champignon.

Les agents capables de diminuer l'épaisseur de la paroi cellulaire d'une bactérie (antibactériens, bactériostatiques ou bactéricides) ou d'un champignon (antifongiques, fongistatiques ou fongicides) sont bien connus de l'homme du métier, et ont été décrits dans la littérature, notamment par Perlin *et al.* (2015).

La cellule à paroi peut quant à elle être isolée d'un sujet infecté par ladite cellule, par exemple à partir d'un échantillon biologique prélevé chez ce sujet. De manière préférée, ledit sujet est un animal, tel que l'homme, ou une plante.

Le procédé de l'invention peut être aussi mis en oeuvre pour créer ou adapter un régime de traitement permettant de lutter contre des cellules à paroi pathogènes, notamment en fonction de la résistance ou de la non-résistance (i.e. sensibilité) de la cellule à paroi à un agent thérapeutique ou susceptible d'être thérapeutique.

Ainsi, selon un autre aspect, l'invention concerne un procédé pour déterminer ou adapter un régime thérapeutique destiné à un sujet infecté par une cellule à paroi pathogène, comprenant :
a) déterminer la résistance d'au moins une cellule à paroi isolée dudit sujet envers un agent ou combinaison d'agents capables de modifier l'épaisseur de la paroi cellulaire, selon le procédé tel que décrit ci-dessus; et
b) déterminer ou adapter un régime de traitement en fonction de la résistance ou de la non-résistance de la cellule à paroi envers ledit agent ou ladite combinaison d'agents, telle que déterminée à l'étape a).

Le terme « traitement » désigne ici aussi bien le type de traitement (i.e. l'agent ou la combinaison d'agents et son mode d'administration), que la dose, le rythme d'administration et/ou la durée du traitement qui est fourni au sujet. La dose, le rythme d'administration et/ou la durée du traitement peut varier, en fonction du stade de la pathologie et du type de traitement sélectionné. Les agents susceptibles d'être utilisés dans le régime de traitement sont soit ceux connus par l'homme du métier pour lutter contre ladite cellule pathogène, ou ceux susceptibles d'être identifiés par le procédé de criblage de l'invention.

Ici, le régime de traitement est déterminé ou adapté et optionnellement administré au sujet en fonction de la résistance ou de la non-résistance de la cellule à paroi envers ledit agent ou combinaison d'agents. En particulier, si la cellule est résistante audit agent ou combinaison d'agents, le traitement sera préférablement stoppé et échangé par un traitement alternatif plus approprié. En revanche, si la cellule est non-résistante (i.e. est sensible) audit agent ou combinaison d'agents, le traitement pourra être soit sélectionné pour la première fois, soit continué. L'homme du métier est à même de déterminer ou d'ajuster le type de traitement avec la dose, le rythme d'administration et/ou la durée du traitement, en fonction de la résistance ou de non-résistance de la cellule.

Le procédé de l'invention peut être aussi mis en oeuvre pour identifier de nouvelles molécules capables de modifier l'épaisseur de la paroi de cellules pourvues de paroi, en particulier pathogènes, et donc nuisibles à l'environnement et/ou à la santé. Ceci est particulièrement utile en cas de résistance de la cellule à paroi aux agents connus pour altérer la paroi cellulaire.

Ainsi, selon un autre aspect, l'invention concerne un procédé *in vitro* pour cribler des agents capables de modifier l'épaisseur de la paroi cellulaire de cellules à paroi, comprenant :
a) mesurer en temps réel l'épaisseur de la paroi cellulaire d'au moins une cellule isolée selon le procédé de l'invention tel que décrit ci-dessus, en présence d'un agent candidat ou combinaison d'agents candidats et optionnellement en absence dudit agent ou de ladite combinaison d'agents ;
b) déterminer si l'épaisseur de la paroi cellulaire est modifiée par ledit agent ou ladite combinaison d'agents ; et
c) optionnellement, identifier l'agent ou combinaison d'agents capables de modifier l'épaisseur de la paroi cellulaire de ladite cellule.

Dans le contexte de la présente invention, l'identification d'agents capables de diminuer l'épaisseur de la paroi de cellules à paroi pathogènes est préférablement recherchée, telles que des cellules de bactérie et/ou de champignon.

Afin de mettre en oeuvre tous les procédés de l'invention, il est en outre particulièrement utile de disposer d'un kit comprenant les composants nécessaires à leur réalisation.

Ainsi, l'invention concerne dans un autre aspect un kit, en particulier pouvant être utilisé dans l'un quelconque des procédés décrits ci-dessus, ledit kit comprenant :
a) un premier marqueur luminescent couplé à une molécule capable de se lier à la face externe de la paroi cellulaire d'une cellule à paroi ; et
b) un second marqueur luminescent couplé à une protéine de la membrane cellulaire de ladite cellule, ou à une molécule capable de se lier à la membrane cellulaire de ladite cellule, ou est capable de se lier à la membrane cellulaire de ladite cellule.

Les modes de réalisation préférés sont tels que décrits ci-dessus.

De manière optionnelle, ledit kit peut en outre comprendre au moins une cellule à paroi isolée telle que définie ci-dessus, pouvant notamment servir de contrôle, et/ou des instructions pour réaliser ledit procédé.

La présente invention sera mieux comprise à la lumière des exemples ci-après.

### DESCRIPTION DES DESSINS

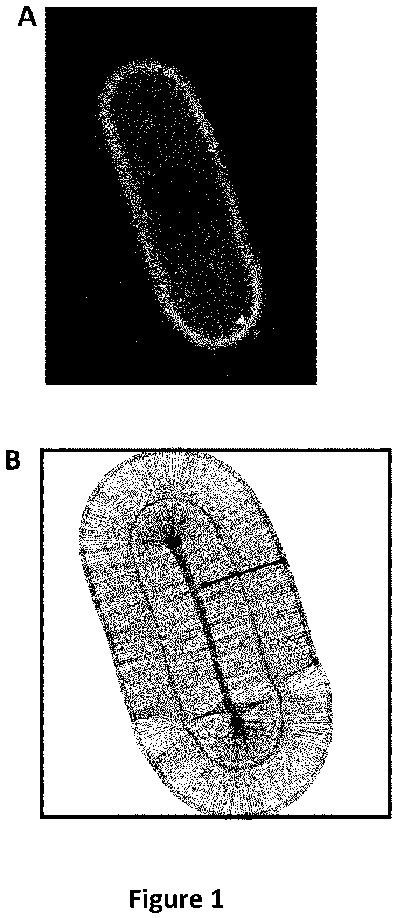

**Figure 1****. Mesure de l'épaisseur de la paroi cellulaire dans des cellules vivantes par méthode de microscopie photonique.** (A) Image initiale d'une cellule de levure exprimant la fusion EGFP-Psy1 (protéine intégrale de la membrane, flèche interne) et marquée avec le couple fluorescent lectine-AlexaFluor-647 sur la face externe de la paroi (flèche externe). (B) Principe de détection locale de l'épaisseur de la paroi : après avoir segmenté le contour de la cellule, des lignes perpendiculaires au contour sont tracées, le long desquelles le signal est analysé. (C) Le long d'une ligne chaque signal est ajusté par une fonction gaussienne. Face interne de la paroi (o), face externe de la paroi (□). La distance entre les deux maximums permet de mesurer une épaisseur de paroi, Δ, à un point de la cellule. (D) et (E) En réitérant cette méthode tout le long du contour de la cellule, des profils ou cartes complètes de l'épaisseur de la paroi dans des cellules vivantes peuvent être établis.

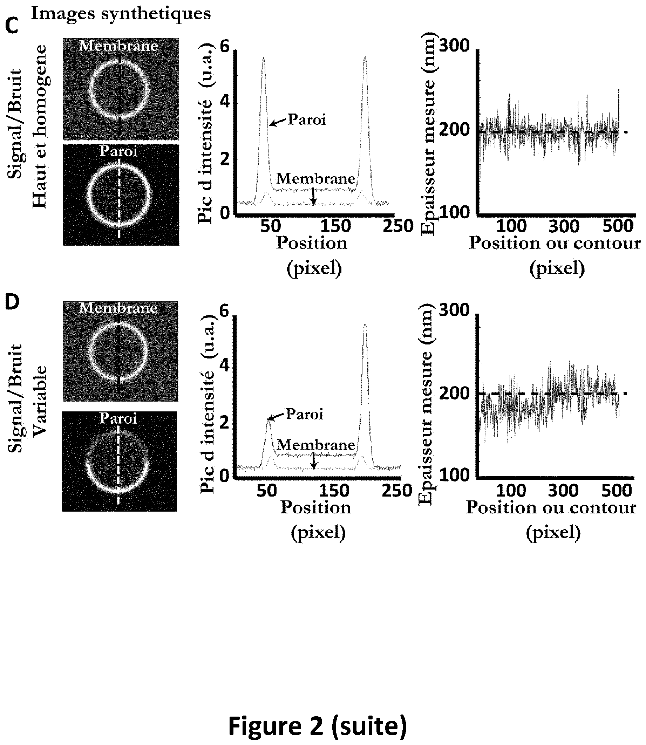

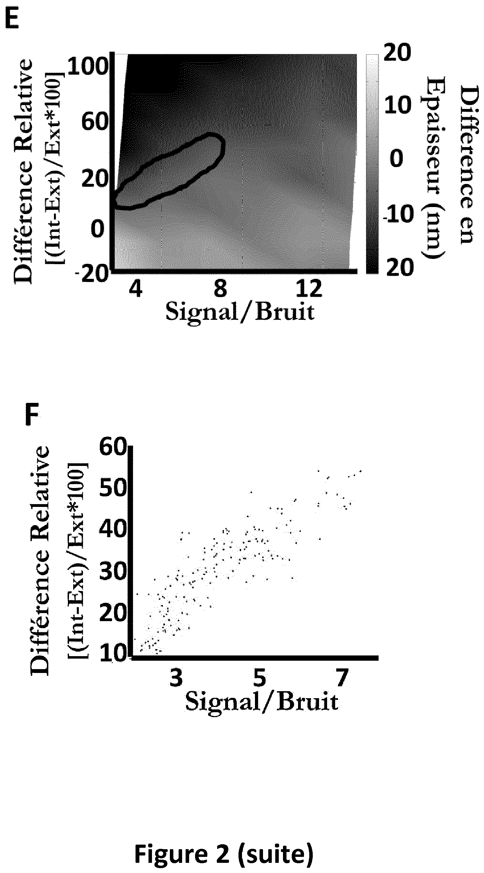

**Figure 2****. Correction du décalage chromatique et influence du rapport signal/bruit sur la mesure.** (A) Cellule contrôle marquée avec des lectines de 2 couleurs différentes et carte de billes multi-spectrales déplacées sur le champ d'observation. (B) Correction du décalage (à gauche avant correction, et à droite après correction). (C) Images synthétiques pour sonder la méthode d'analyse (Panels de gauche). Pics gaussien (Panel du milieu) (Gris clair: membrane ; gris foncé: Lectine). Epaisseur de la paroi autour de la cellule (Panel de droite). (D) Cellule synthétique ayant deux régions avec des signaux d'intensité différentes (Panels de gauche). Pics gaussien (Panel du milieu) (Gris clair : face interne de la paroi ; gris foncé: face externe de la paroi). Epaisseur de la paroi autour de la cellule (Panel de droite). (E) Diagramme résumant les effets du signal/ bruit sur la mesure de l'épaisseur. La zone délimitée par le trait noir correspond aux valeurs typiques dans nos mesures. (F) Evolution de la valeur moyenne de l'épaisseur de la paroi en fonction du rapport signal sur bruit.

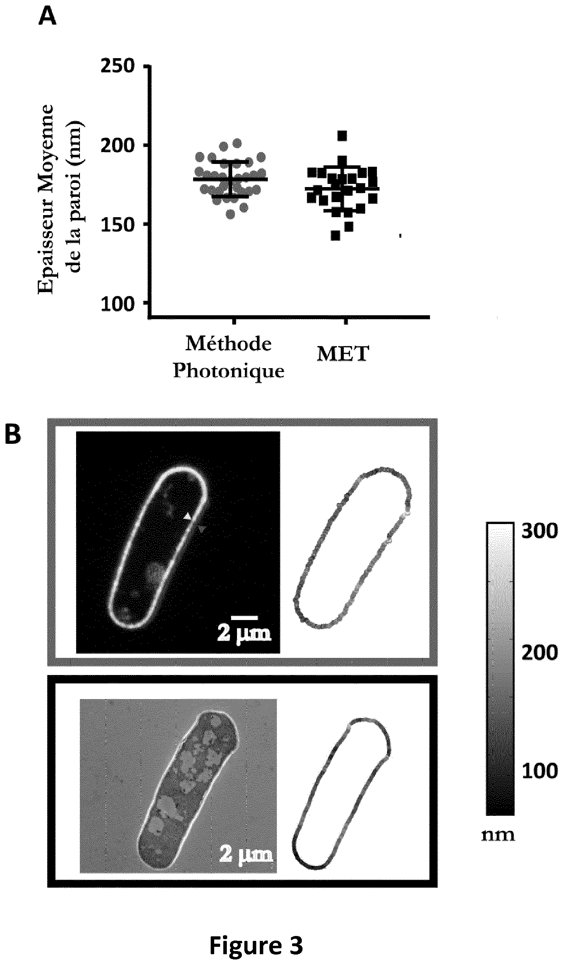

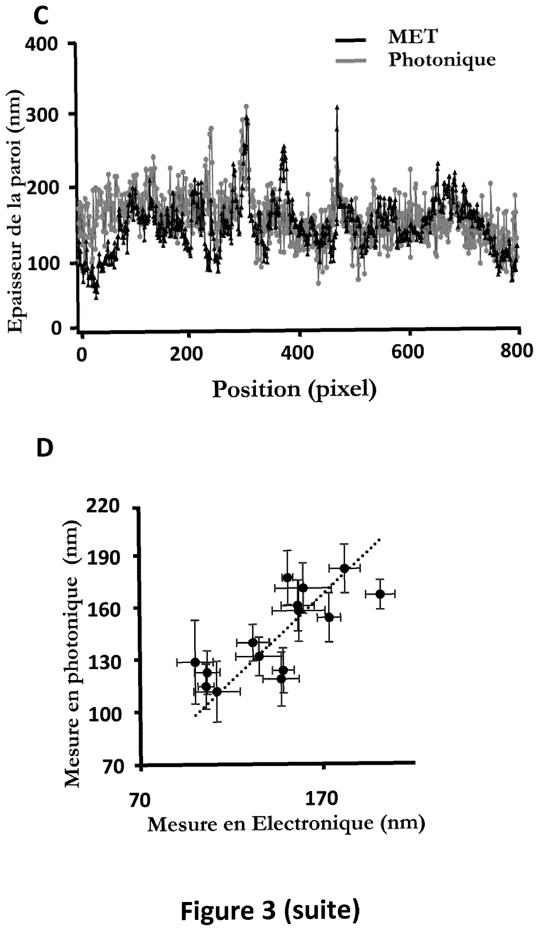

**Figure 3****. Comparaison de la méthode de l'invention avec celle réalisée par microscopie électronique à transmission (MET).** (A) Distributions de valeurs moyennes de l'épaisseur de la paroi cellulaire mesurée par la méthode de l'invention (ronds, à gauche) et par microscopie électronique à transmission (carrés, à droite). (B) CLEM (« Correlative Ligth Electron Microscopy ») permettant de visualiser l'épaisseur locale de la paroi cellulaire par la méthode de l'invention (panels du haut) et par microscopie électronique (panels du bas). Images originales (panels de gauche). Cartes de la paroi (panels de droite). (C) Comparaison entre les deux mesures pour la cellule présentée en B (ronds : mesure par la méthode de l'invention ; triangles : mesure par microscopie électronique à transmission, i.e.MET). (D) Analyse de corrélation entre les deux méthodes obtenues par CLEM pour 15 régions sous-cellulaires de taille de 3 micromètres effectués sur 8 cellules individuelles (en abscisse: mesure par microscopie électronique à transmission, i.e. MET; en ordonnée : mesure par la méthode de l'invention). La ligne pointillée indique l'ajustement linéaire de ces données, et sa pente est proche de 1, suggérant une corrélation précise.

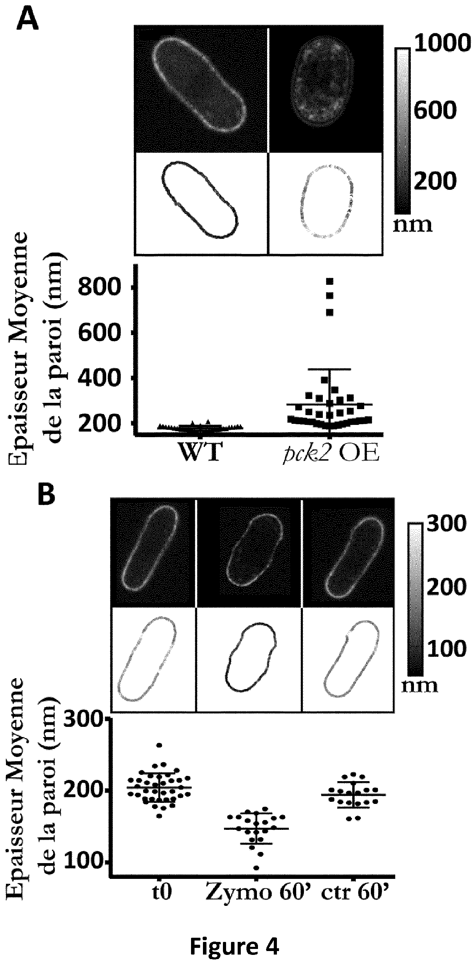

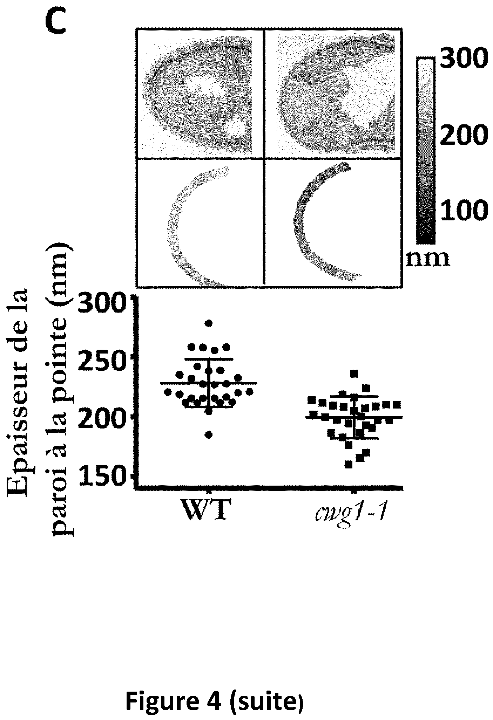

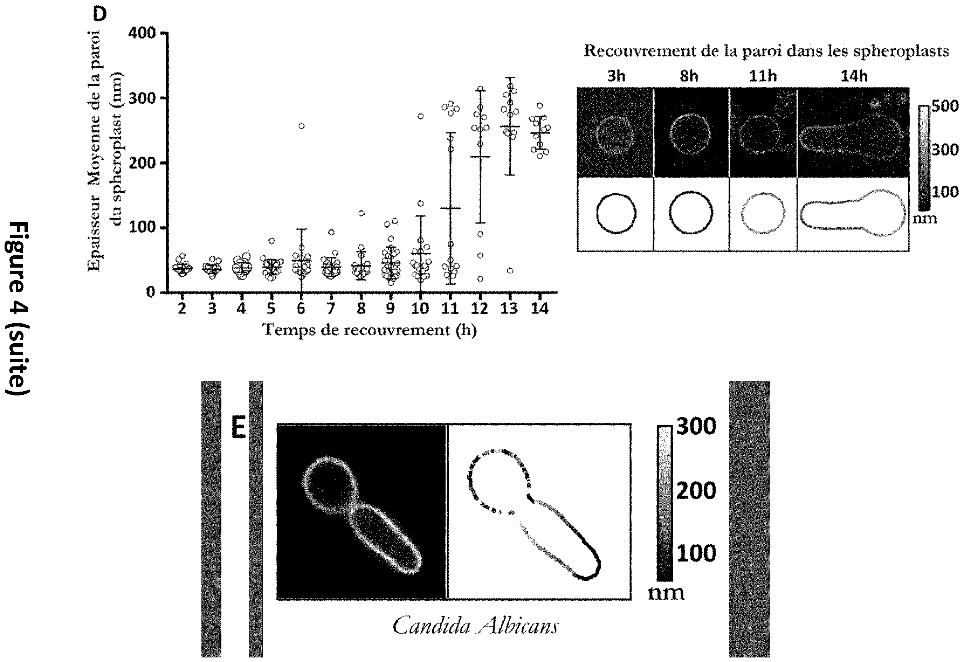

**Figure 4****. Utilisation de la méthode de l'invention pour détecter des variations locales, globales et temporelles d'épaisseur chez la levure, et application chez *Candida Albicans.*** (A) Image par microscopie photonique d'une cellule de levure sauvage (panel du haut et à gauche), et carte de sa paroi cellulaire (panel du centre et à gauche), et image d'une cellule de levure mutante fabriquant de la paroi cellulaire 2 à 3 fois plus épaisse par surexpression de la protéine pck2p (panel du haut et à droite) et carte de sa paroi cellulaire (panel du centre et à droite). (Panel du bas) Quantification des épaisseurs moyennes de la paroi de ces deux cellules (à gauche, triangles : cellule de levure sauvage ; à droite, carrés : cellule de levure mutante). (B) Traitement par l'enzyme zymolase d'une cellule de levure sauvage causant une réduction nette de l'épaisseur après 60 min de traitement. Cellule à t=0 (panels de gauche) : image par microscopie photonique (panel du haut), carte de sa paroi (panel du centre) et quantification moyenne de la paroi cellulaire (panel du bas). Cellule traitée par zymolase à t=60 minutes (panels du centre) : image par microscopie photonique (panel du haut), carte de sa paroi (panel du milieu) et quantification moyenne de la paroi cellulaire (panel du bas). Cellule non traitée par zymolase à t=60 minutes (panels de droite) : image par microscopie photonique (panel du haut), carte de sa paroi (panel du centre) et quantification moyenne de la paroi cellulaire (panel du bas). (C) Comparaison entre une levure sauvage (panels à gauche) et une levure mutante (*cwg1*-1) ayant un défaut de fabrication de la paroi cellulaire et dont la paroi est ainsi 2 fois plus fine (panels à droite) : images représentatives de cellules de levure fixées et imagées en microscopie électronique à transmission (panels du haut), mesure des épaisseurs aux pointes de cellules vivantes (panels du centre), quantification des épaisseurs aux pointes (panels du bas). (D) Dynamique de reformation de la paroi cellulaire chez des sphéroplastes en recouvrement, au cours du temps. Valeurs mesurées de l'épaisseur sur une série de cellules individuelles en fonction du temps (panel de gauche). Images originales (Haut) et cartes d'épaisseur (Bas) pour une série de sphéroplastes en recouvrement. (E) Validation de la méthode de l'invention chez le champignon filamenteux et pathogène *Candida Albicans.* Image par microscopie photonique (panel de gauche), et carte de la paroi cellulaire (panel de droite)

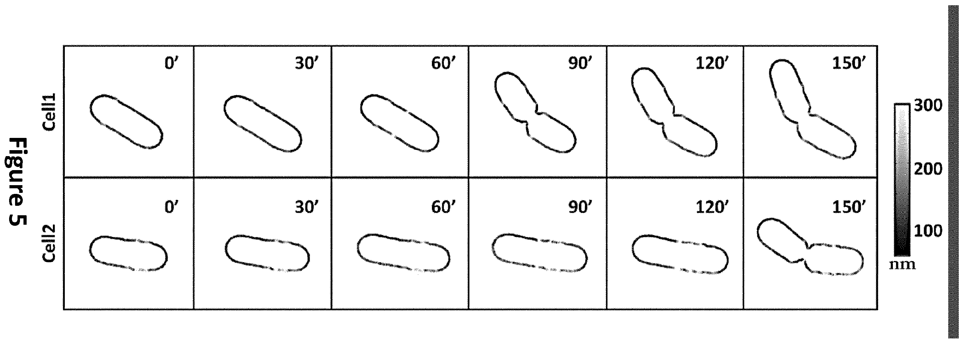

**Figure 5****. Dynamique spatio-temporelle de la paroi au cours du cycle cellulaire.** Photos de films indépendants de 2 cellules de levure fissipare grandissant et se divisant avec une mesure du profil d'épaisseur à différents points dans le temps.

### EXEMPLES

### 1. MATERIEL ET METHODES

### 1.1. Marquage fluorescent des cellules

La culture des levures fissipare *Schizosaccharomyces pombe* a été effectuée selon des protocoles standards (http://www-bcf.usc.edu/∼forsburg/). Les cellules ont été cultivées tout d'abord sur boites d'agar de milieu YE5S, puis en milieu liquide sur la nuit. Les souches utilisées sont décrites dans le Tableau 1. Ces cellules expriment le marqueur de membrane plasmique EGFP-Psy1 ou mCherry-Psy1. Pour marquer l'extérieur de la paroi, la lectine issue de *Griffonia simplificifolia* liée à un fluorophore brillant dans le rouge lointain (Alexa Fluor 647 isolectin GS-IB4, LifeTechnologies) a été ajoutée à une concentration finale de 5µg/ml à partir d'un stock au 200X. Pour tester d'autres combinaisons de couleur, les mêmes lectines conjuguées au TRITC (Tetramethylrhodamine - Sigma) ou FITC (fluorescein isothiocyanate - Sigma) ont également été essayées. L'incubation a été faite sur un rotor pendant 10min; après quoi les cellules ont été placées soit sur un pad 2% agar de YE5S contenant une concentration de lectine de 5µg/ml. Alternativement, les cellules ont été placées au sein d'une chambre microfluidique, coincées entre une membrane de dialyse et une lamelle (Charvin *et al.,* 2008). Ces chambres permettent un échange constant du milieu et donc un approvisionnement constant de lectines fluorescentes.

Les cellules de champignons *Candida Albicans* ont été quant à elles cultivées sur la nuit dans un milieu YEPD+Uri (2% glucose) à 30°C, puis re-diluées pour obtenir une culture ayant une densité optique de 0.6. Pour engendrer la filamentation, ces cellules ont été cultivées dans un milieu contentant 50% de FCS à 37°C, pendant 1 à 2h. La souche utilisée exprime un marqueur de membrane fluorescent construit par la fusion d'une protéine fluorescente verte (EGFP) à l'extrémité C-terminale de la protéine CtRac1 correspondant à SEQ ID NO :4 (voir tableau 6). Pour marquer l'extérieur de la paroi, la lectine WGA couplée à Alexa594 (Life) a été ajoutée à une concentration finale de 100 µg/ml.

**Tableau 6. Souches de microorganismes utilisées**

| **Souche** | **Origine de la cellule imagée** | **Type Sexuel** | **Génotype** | **Autotrophies** |
|---|---|---|---|---|
| NM 468 | S. *pombe* | h+ | Leu:EGFP-psy1 | Ura-4-D18 Leu-32 |
| NM 469 | S. *pombe* | h- | Leu:EGFP-psy1 | Ura-4-D18 Leu-32 |
| VD115 | S. *pombe* | | Leu:EGFP-psy1 cwg1-1 CRIB-tdTomato:ura | Ura-4-D18 Leu-32 |
| VD94 | S. *pombe* | h- | ade6:EGFP-psy1 pREP3X-pck2 | Ade6 Ura4-D18 Leu-32 |
| PY173 | *C*. *albicans* | | RP10::ARG4-pADH1-EGFP-CtRac1 | ade2Δ::hisG/ade2Δ::hisG ura3Δ::limm434/ura3Δ:: limm434 his1Δ::hisG/his1Δ::hisG arg4Δ::hisG/arg4Δ::hisG ENO1/eno1::ENO1-tetRScHAP4AD-3xHA-ADE2 |

### 1.2. Imagerie

Pour maximiser la résolution spatiale et limiter le bruit de fond, un système de confocal à tête « spinning », yokogawa X1, monté sur un statif Nikon Ti, muni d'une caméra EM-CCD couplée à un grossisseur 2.5X, a été utilisé.

Les cellules de levures ont été imagées avec un objectif Nikon 100X 1.4 NA Plan Apo oil, amenant une taille de pixel de 43,1nm. Ce choix a été fixé après essais de nombreux systèmes confocaux droits et d'épifluorescence. Les cellules de *Candida Albicans* ont quant à elles été placées entre lame et lamelle et imagées sur un système de confocal « spinning », avec une taille finale de pixel de 130 nm.

### 1.3. Analyse et registration des images

L'analyse d'images brutes pour obtenir les mesures locales d'épaisseur de la paroi cellulaire a utilisé une série de scripts développée sur le logiciel MatLab (Mathworks). L'image de la cellule a d'abord été segmentée à l'aide du signal fluorescent émanant de la lectine ou de la membrane. A partir de cette segmentation, des lignes perpendiculaires ont été tracées pour chaque pixel du contour de la cellule. Ces lignes ont une taille modulable, mais qui est généralement fixée à 4 µm (93 px). Le long de chaque ligne, l'intensité des deux signaux fluorescents a été modélisée par des gaussiennes dont le pic est détecté de manière automatique. La distance entre ces deux pics correspond à l'épaisseur de la paroi locale.

Les aberrations chromatiques susceptibles de créer des décalages dans le plan ou en profondeur des deux signaux ont été compensées, soit par l'utilisation de billes (TETRASPECK-microspheres, 0,2 µm, blue/green/red/far red) qui permettent d'établir une carte des déformations, soit en imageant des cellules marquées avec deux lectines de couleurs différentes. Ces cartes ont été utilisées dans le script pour corriger l'analyse de l'épaisseur initiale. Les scripts intégrant ces cartes permettent ainsi d'effectuer des corrections manuelles du de la modélisation sous forme de gaussienne pouvant provenir de signaux aberrants, mais également d'effectuer des mesures moyennées sur une partie de la cellule.

### 1.4. Microscopie Corrélative

Pour comparer l'épaisseur de la paroi sur les mêmes cellules par la méthode de l'invention à celle réaliser par microscopie électronique à transmission (MET), les cellules ont été marquées comme précédemment décrit et collées sur une boîte de Petri à fond de verre gradué (Ibidi) préalablement traitée à la PolyLysine (1mg/ml pendant 20min).

Les cellules ont été tout d'abord fixées pendant 2h dans du YE5S contenant 2 % de glutaraldehyde à 4°C, puis rincées une fois dans du YE5S et 3 fois dans de l'eau, pour être ensuite imagées en suivant la même procédure que précédemment, tout en prenant soin d'imager les marqueurs de position sur la lame de verre. Les cellules ont alors été refixées pendant 45 min dans une solution d'osmium (2% OsO4 dans l'eau) dans l'obscurité, rincées 2x dans de l'eau, puis deshydratées dans des solutions successives d'éthanol pendant 5 min à chaque fois (30% , 50% , 70%, 80%, 95% EtOH), suivi par 2x 10min dans 95% EtOH et 3x 6min dans 100% EtOH. Finalement, un rinçage des cellules a été réalisé dans de l'oxyde de propylène pendant 10 minutes, et les cellules ont été incluses dans une solution EPON/oxyde de propylène 1vol/1vol pendant 1h couvertes et 1h sans couvercle. Elles ont ensuite été placées dans de l'EPON pure qui est polymérisée à 60°C pendant 48h. Les boîtes de Petri comprenant ces cellules ainsi traitées ont finalement découpées au microtome, et les coupes placées sur des grilles de microscopie électronique colorées à l'uracil d'acetyl et au citrate de plomb. Finalement, les images ont été acquises sur un Microscope électronique à transmission Tecnai12 (FEI) à 80 kV équipé d'une caméra 1K×1K Keen View (Olympus).

### 1.5. Recouvrement de sphéroplastes

Des sphéroplastes (cellules sans paroi cellulaire) ont été générés en plaçant des cellules de levure dans une solution contenant 0,1M d'acide citrique 0,1 M de Citrate de Sodium (pH = 5.8) et 1,2 M de Sorbitol et une enzyme de digestion de paroi, Lallzyme MMX (Lallemand), à une concentration de 0.1 g/ml et ce pendant 45 min. Après digestion de la paroi, les cellules ont été observées au microscope pour s'assurer qu'elles aient adoptées une forme ronde. Pour permettre la resynthèse de la paroi, les sphéroplastes ainsi obtenus ont été placés dans du YE5S liquide contenant 1 M Sorbitol dans un agitateur à 25°C puis marquées à la lectine à différents temps et imagées au microscope comme décrit ci-dessus.

### 1.6. Essais à la Zymolyase

Pour partiellement digérer la paroi cellulaire, les cellules étudiées ont été marquées à la lectine et placées dans une solution YE5S contenant 500U/ml de Zymolyase (ZymoResearch).

### 2. RESULTATS

### 2.1. Une nouvelle méthode pour imager l'épaisseur de la paroi

A ce jour, la seule méthode connue permettant d'obtenir des informations sur la paroi cellulaire de n'importe quelle espèce à paroi est la microscopie électronique. Cette approche est néanmoins associée à différents artefacts et ne permet pas d'observer cette structure dans des cellules vivantes. La présente méthode permet de pallier à ce besoin. Le concept de l'invention repose en effet sur le marquage des deux côtés de la paroi cellulaire par deux fluorophores de couleurs différentes, et sur l'utilisation de microscopie en super-résolution pour mesurer localement l'épaisseur. La levure *Schizosaccharomyces pombe* a été utilisée ici comme modèle, car il s'agit d'une cellule qui permet aisément les manipulations génétiques, dont la forme stéréotypée de bâtonnet est facile à observer, et dont la paroi cellulaire a été caractérisée dans différentes études (Chang *et al.,* 2009; Davi et al., 2015).

Pour marquer la face interne de la paroi, des protéines ou des colorants qui s'associent à la membrane plasmique juxtaposée à la paroi, ont été utilisés. Différentes protéines ont été testées, parmi lesquelles Pma1, Psy1, et Syb1 (Iwaki *et al.,* 2008; Yamaoka *et al.,* 2013) : la protéine Psy1 qui est une protéine accrochée à la membrane a fourni les meilleurs résultats en terme de force et homogénéité du signal. Les couples de fluorophore-protéines EGFP-Psy1 (émission dans le rouge) et mCherry-psy1 (également émission dans le rouge) ont aussi été testés, menant à une légère préférence pour la EGFP. Par ailleurs, des colorants comme ceux de la famille DiBAc (Haupt *et al.,* 2014), qui s'insèrent spécifiquement dans la membrane plasmique ont été validés et peuvent être envisagés pour marquer la membrane d'autres espèces, en particulier celles qui ne sont pas génétiquement modifiables.

Le marquage de la face externe de la paroi est ici basé sur le fait que des glycoprotéines sont généralement sécrétées sur cette face. La nature glucidique des glycoprotéines est normalement propre à chaque espèce (par exemple, le galactomannan, chez la levure S. *pombe*), et peut être reconnue de manière spécifique par une famille de protéines appelées les lectines (Horisberger *et al.,* 1985). Dans le cadre de l'optimisation de la méthode de l'invention, différents types de lectines ont été testées, et celles issues de *Griffonia simplificifolia* ont été sélectionnées, celles-ci étant déjà disponibles commercialement liées à différent fluorophores (FITC, Tritc ou Alexa 647). Tous les couples de couleurs entre signal membranaire et lectine ont fonctionné pour la mesure, mais pour des raisons d'optimisation du signal et d'analyse, le couple EGFP-Psy1 et Lectine-Alexa 647 a été préférentiellement sélectionné. Le marquage par la lectine-Alexa 647 a ensuite été optimisé pour obtenir le meilleur signal, sans affecter la croissance cellulaire. Une gamme de concentration de lectine entre 1 et 10 µg/ml a donné en général de bons résultats. Néanmoins, lorsque les cellules grandissent, la nouvelle paroi synthétisée n'est plus marquée par la lectine, et un apport constant de lectine fraiche dans la solution est ainsi nécessaire. Pour cela, de la lectine a été ajoutée directement dans les pads d'agar servant de support à la croissance et à l'imagerie des cellules, ou, alternativement, des chambres à flux microfluidique ont été utilisées dans lesquelles les cellules marquées ont été immobilisées entre une membrane de dialyse et la lamelle du fond de la chambre et apportant en flux continu de la lectine.

Pour imager les cellules, les systèmes de microscopies ont été optimisés pour maximiser les signaux, et dans le même temps obtenir la meilleure résolution spatiale afin de réussir à cartographier de manière aussi précise que possible l'épaisseur de la paroi tout autour de cellules individuelles (voir ci-après). La résolution spatiale dans le plan ainsi déterminée est de 43.1 nm, c'est-à-dire, deux valeurs de résiliation de 43,1 nm ont été distinguées le long du contour de la cellule). Quant à la mesure de l'épaisseur de la paroi cellulaire, celle-ci est plus précisément réalisée à une résolution d'environ 10 nm,

A partir d'une image telle que celle présentée dans la Figure 1A, un processus d'analyse d'images a été implémenté de manière à segmenter le contour de la cellule, puis à tracer des lignes perpendiculaires au contour pour détecter successivement les signaux issus de la lectine et de la membrane (Figure 1B). Ces lignes de 4 µm (93 px) de longueur ont été espacées le long du contour par la taille d'un pixel (43.1nm). Le signal fluorescent a été ajusté le long de chacune de ces lignes par une fonction gaussienne, et dont le centre est détecté, la distance entre les deux pics correspondant à l'épaisseur locale de la paroi. Cette distance a été mesurée avec une précision de +/- 10nm. Ce processus a par la suite été répété tout autour de la cellule pour obtenir l'évolution de l'épaisseur en fonction de la position autour de la cellule qui peut être représentée sur un graphique (Figure 1D), ou par le biais d'une carte reproduisant les couleurs des marqueurs de la face externe et interne de la paroi (Figure 1E).

La force du signal ainsi que la construction de la méthode et des scripts d'analyse, permettent une mesure de l'épaisseur résolue au pixel près.

### 2.2. Correction des aberrations chromatiques et des différences de signaux

Du fait d'aberrations chromatiques associées à tous les systèmes de microscopie de fluorescence, les images venant de la ligne bleue (utilisée pour imager EGFP-Psy1) et de la ligne rouge lointain (utilisée pour imager la lectine-AlexaFluor-647), n'ont pas été exactement alignées. Cet effet engendre des décalages légers susceptibles de donner lieu à des asymétries dans la carte d'épaisseur de la paroi qui ne correspondent pas à la réalité biologique. Pour pallier àcela, un système d'alignement mesurant précisément le décalage entre les lignes et permettant de compenser ce décalage dans l'analyse a été introduit. Pour ce faire, des cellules marquées avec deux lectines de couleurs différentes ont été utilisés comme calibre : la lectine-FITC (qui fluoresce sur la même ligne que EGFP-Psy1) et la lectine-AlexaFluor-647 (Figure 2A). Ces deux signaux doivent, par construction, être parfaitement alignés. Un décalage moyen sur 20 contrôles a ainsi été mesuré et compensé pour corriger les cartes de paroi. Au cours de l'optimisation, des billes fluorescant dans de multiples longueurs d'onde ont également été utilisées, et ont donné les mêmes résultats (Figure 2A et 2B). Les décalages en profondeur ont également été calibrés donnant des imprécisions inférieures à 10 nm ; et ont donc rentré dans le bruit associé à la méthode.

Les images obtenues fluorescent fortement là où le marqueur est localisé mais également quelque peu à l'intérieur de la cellule et à l'extérieur. Ces signaux de fond, peuvent en principe créer des asymétries dans la détection du centre du pic gaussien, qui pourraient alors créer des biais sur les valeurs des mesures d'épaisseur. Pour sonder ces effets, des simulations ont été effectuées, durant lesquelles des images similaires à celles analysées ont été créées de manière artificielle, mais en générant différents signaux et bruits artificiellement. Ces images artificielles, ont ensuite été analysées par le même procédé d'analyse d'image pour évaluer les erreurs potentielles (Figure 2C et 2D). Ces analyses ont montré que le décalage causé par les variations de bruit de fond est resté négligeable et n'a pas influencé la mesure de manière significative, dans le domaine de signaux typiquement obtenus par la méthode d'imagerie de l'invention (Figure 2E et 2F). Elles permettent par ailleurs de valider la mesure locale, proposée ici, sur des cellules susceptibles de présenter des variabilités de signaux naturels autour de leur contour.

### 2.3. Validation de la méthode par comparaison à la MET

La méthode de l'invention a été validée tout d'abord en comparant directement les mesures obtenues avec celles de l'état de l'art, qui est basée sur la microscopie électronique. Une première validation a consisté à comparer les mesures moyennées à l'échelle globale de différentes cellules, obtenues par la méthode de l'invention et par microscopie électronique à transmission (MET). Cette comparaison a montré que les mesures réalisées par la méthode de l'invention possèdent une valeur moyenne, ainsi qu'un bruit reflétant les variations à l'échelle de la population très similaires à celles de la méthode basée sur la MET, validant ainsi la méthode présentée ici (Figure 3A).

L'un des points forts de la présente méthode est qu'elle permet de résoudre spatialement les changements d'épaisseur autour de la cellule. Cette propriété a été vérifiée par des expériences de CLEM (« Correlative Light-Electron Microscopy ») qui ont permis de mesurer, dans la même cellule, l'épaisseur de la paroi par microscopie électronique et par la méthode de l'invention. Ces expériences ont montré une corrélation quasi-parfaite entre les deux mesures, tout autour de chaque cellule (Figure 3B-3D); la différence entre les deux mesures étant plus faible que le bruit associé à la mesure elle-même. Il peut ainsi être conclu que la méthode d'imagerie de l'épaisseur de la paroi sur cellule vivante proposée par la présente invention donne des valeurs locales précises reflétant clairement la biologie du système.

### 2.4. Validation de la méthode de l'invention dans des conditions de parois défectueuses et d'autres espèces de champignons

Pour établir la souplesse et la robustesse de la méthode de l'invention, celle-ci a été appliquée pour mesurer l'épaisseur de la paroi cellulaire de mutants de levures dont les parois sont plus fines ou plus grosses que des levures sauvages, ou dans des conditions enzymatiques permettant de digérer partiellement la paroi. En effet, un tel mutant et une levure surexprimant la protéine pck2 sont connus pour présenter des parois très épaisses, (Arellano *et al.,* 1999). Avec la présente méthode, des parois de cellules mutantes ayant des épaisseurs allant jusqu'à 800nm (Figure 4A) ont ainsi pu être mesurées. Inversement, des cellules de levure ont été traitées avec des concentrations faibles de Zymolyase, une enzyme capable de digérer la paroi. Au bout d'une heure de traitement, un amincissement conséquent de la paroi a pu être observé avec une réduction typique de 30% de l'épaisseur (Figure 4B). De manière similaire, la méthode de l'invention a permis de détecter des réductions significatives de l'épaisseur à la pointe de cellules de levure dont un allèle *cwg1-1* est défectueux pour la synthèse de la paroi spécifiquement à ladite pointe (Munoz *et al.,* 2013)(Figure 4C). Enfin, la méthode de l'invention a été utilisée pour observer comment les cellules sphéroplastées (i.e. sans paroi) régénèrent leurs parois au cours du temps : cela a permis de montrer qu'une fine couche de paroi d'environ 60nm est tout d'abord déposée, suivi par une re-synthèse rapide de la paroi entre la 9^{ème} heure et 12^{ème} heure de croissance des sphéroplastes (Figure 4D). Pour conclure, ces données valident la souplesse et l'applicabilité de la méthode pour comprendre des variations locales ou globales de la paroi.

La méthode de l'invention a ensuite été validée dans d'autres espèces. Pour ce faire, une approche similaire a été mise en place pour mesurer l'épaisseur de la paroi au cours de la filamentation chez le champignon pathogène *Candida Albicans.* La face interne de la paroi de ce champignon a été marquée avec une EGFP fusionnée à l'extrémité C-terminale de la protéine Rac1 qui cible la membrane plasmique ; tandis que la lectine WGA- AlexaFluor-594 a été utilisée pour marquer la face externe, car celle-ci reconnait plus spécifiquement la face externe de la paroi chez cette espèce (Figure 4E). Cette expérience a permis d'observer des valeurs similaires à celles reportées dans la littérature (Staniszewska *et al.,* 2012) : la méthode de l'invention peut ainsi s'appliquer à différents types de champignons filamenteux et à d'autres cellules à paroi, telles que les bactéries, les algues, plantes et/ou archées.

### 2.5. Mesure en « time-lapse » de l'évolution de l'épaisseur pendant la croissance de cellules.

La méthode de l'invention permettant de mesurer les valeurs de la paroi dans des cellules vivantes, il a ensuite été étudié si celle-ci permettait également d'obtenir des mesures séquentielles de l'épaisseur de la paroi. Pour faire cette démonstration, des cellules de levures ont été placées sur des pads d'agar dans lesquels de la lectine a été ajoutée, ceci afin d'éviter les effets de dilution du signal associé à la croissance cellulaire, et ainsi pouvoir filmer les cellules avec un intervalle de 30min pendant typiquement 3h. Ces films ont montré que la méthode de l'invention en dynamique demeurait valide et permet d'observer les variations spatio-temporelles de l'épaisseur au cours de la croissance et de la division cellulaire (Figure 5).

### 3. CONCLUSION

La méthode d'imagerie de la présente invention est une méthode simple, nouvelle et innovante permettant de sonder les propriétés de la paroi cellulaire de cellules possédant une telle paroi. Elle permet de mesurer, avec une précision à ce jour inachevée, l'épaisseur de cette structure essentielle à la survie de ces cellules. L'un des avantages de cette méthode est qu'elle est implémentable avec des systèmes de microscopie disponibles dans la plupart des centres de recherche ou de développement, et qu'elle a donc le potentiel d'être utilisée dans de nombreuses applications. Il s'agit d'une méthode précise, mais également versatile, susceptible d'être appliquée pour mesurer aussi bien l'épaisseur de la paroi de multiples types cellulaires, allant de la levure, au champignon, voire aux bactéries, archées, plantes et algues, que de sonder la réponse de la paroi cellulaire à des drogues, ou encore d'étudier des cellules mutées dont la paroi a été modifiée. Par ailleurs, la paroi cellulaire étant actuellement la cible principale des agents antifongiques, il ne fait aucun doute que la présente méthode présente un important potentiel biomédical et agronomique.

La présente méthode est extrêmement précise car elle fournit une mesure locale, avec une résolution de l'ordre de la cinquantaine de nanomètres, et ne nécessite pas de moyenner des mesures car il n'y a pas de problèmes d'homogénéité dans la mesure de l'épaisseur. Elle permet en outre des observations sur de longues périodes de temps (jusqu'à plusieurs heures), ce qui rend possible des essais sur le long terme.

Enfin, au regard du vaste champ d'applicabilité de cette méthode, de sa souplesse et de sa simplicité, la présente méthode peut être utilisée pour étudier aussi bien les fondamentaux de la synthèse de la paroi cellulaire que pour développer et tester de nouveaux composants détruisant la paroi cellulaire d'organismes non désirables, tels que les antifongiques ou les antibiotiques.

### REFERENCES

Ai et al. (2007). Biochemistry; 46(20): 5904-5910.
Ai et al. (2006). Biochem; 400(3): 531 -540.
Ai et al. (2008a). BMC Biology; 6(1): 13.
Ai et al. (2008b). Nature Methods; 5(5): 401-403.
Bajar et al. (2016). Sci. Rep ; 6: article number 20889.
Arellano et al. (1999). J Cell Sci.; 112 (Pt 20):3569-3578.
Barre et al. (2001). Biochimie; 83(7):645-51.
Chacko et al. (2001). Int J Biol Macromol.;28(5):365-71.
Chang et al.(2014). BMC Biol.; 12:54.
Chang et al. (2009). Cold Spring Harb Perspect Biol.; 1:a001347.
Charvin et al. (2008). PLoS One; 3:e1468.
Chen et al. (2013). Adv Drug Deliv Rev; 65(10):1357-1369.
Chu et al. (2014). Nature Methods; 11 (5): 572-578.
Cornellissen-Gude et al. (1997). J. Phys. Chem. A; 101 (50), pp 9673-9677.
Cubitt et al. (1998). Methods in Cell Biology; 58:19-30.
Davi et al. (2015). Curr Opin Microbiol. 28:36-45.
Day et al. (2009). Chem Soc Rev; 38(10):2887-921.
Domozych et al. (2012). Front Plant Sci.; 3:82.
Erard et al. (2013). Mol. BioSyst.; 9(2): 258-267.
Evdokimov et al. (2006). EMBO Rep; 7(10): 1006-1012.
Filonov et al. (2011). Nat Biotechnol; 29(8): 757-761.
Fradkov et al. (2002). Biochem J.; 368: 17-21.
Fritz J.S. et Gjerde D.T. (2009). Ion chromatography, 4ème édition. Wiley-VCH. ISBN: 978-3-527 -32052-3.
Fujihashi et al. (2003). Biochemistry; 42(38):11093-9.
Goedhart et al. (2010). Nature Methods; 7(2): 137-139.
Goedhart et al. (2012). Nature Communications; 3: 751.
Griesbeck et al. (2001). Journal of Biological Chemistry; 276(31): 29188-29194.
Gupta et al. (Ed.) (2012). Laboratory Protocols in Fungal Biology: Current Methods in Fungal Biology. Springer. ISBN-13: 978-1461423553.
Gurskaya et al. (2003). Biochem. J.; 373: 403-408.
Han et al. (2002). Ann N YAcad Sci.; 971: 627-33.
Haupt et al. (2014). PLoS Biol.; 12(12):e1002029.
Heim et al. (1994). Proceedings of the National Academy of Sciences; 91 (26): 12501 - 12504.
Herman (2001). Curr Protoc Cell Biol.; Appendix 1:Appendix 1E
Hermanson G.T. (2013). Bioconjugate Techniques, 3ème édition. Elsevier. ISBN: 978-0-12-382239-0.
Hoi et al. (2013). Chemistry & Biology; 20(10): 1296-1304.
Horisberger et al. (1985). Experientia; 41:748-750.
Hormia et al. (1998). J Histochem Cytochem.; 36(10):1231-7.
Hurley et al. (2000). Annu. Rev. Biophys. Biomol. Struct.; 29:49-79.
Iwaki et al. (2008). Microbiology; 154:830-841.
Johnson et al. (2009). Journal of Biological Chemistry; 284(31): 20499-20511.
Karasawa et al. (2003). Journal of Biological Chemistry; 278(36): 3416734171.
Karasawa et al. (2004). Biochem. J.; 381 (1): 307-312.
Keegstra et al. (2010). Plant Physiol.; 154(2):483-486.
Kogure et al. (2006). Nat Biotechnol; 24(5): 577-581
König H., Claus H., et Varma A. (Ed.) (2010). Prokaryotic Cell Wall Compounds, Structure and Biochemistry. Springer. ISBN 978-642-05061-9.
Kredel et al. (2009). PLoS ONE; 4(2): e4391.
Kremers et al. (2006). Biochemistry; 45(21): 6570-6580.
Kresch et al. (1991). Lung ;169(3):139-51.
Lam et al. (2012). Nature Methods; 9(10): 1005-1012.
Lin et al. (2009). Chemistry & Biology; 16(11): 1169-1179.
Markwardt et al. (2011). PLoS ONE; 6(3): e17896.
Matz et al. (1999). Nat Biotechnol; 17: 969-973.
Mena et al. (2006). Nat Biotechnol; 24(12): 1569-1571.
Merzlyak et al. (2007). Nature Methods; 4(7): 555-557.
Meyer et al. (2014). Microbiologyopen. ; 3(4): 531-43.
Morozova et al. (2010) Biophysical Journal; 99(2): L13-L15.
Mujumdar et al. (1993). Bioconjug Chem. ;4(2):105-11.
Munoz et al.(2013). J Cell Biol.; 203:265-282.
Nagai et al. (2002). Nat. Biotechnol.; 20(1): 87-90.
Nguyen et al. (2005). Nat Biotechnol.; 23(3): 355-360.
Orm et al. (1996). Science; 273(5280): 1392-1395.
Osumi et al. (1998). Fungal Genet Biol. 24:178-206.
Paddock S. W. (Ed.) (2014). Methods in Molecular Biology,Confocal microscopy: Methods and Protocols. Springer
Pédelacq et al. (2005). Nat Biotechnol; 24(1): 79-88.
Perez, P., and J.C. Ribas (2004). Methods; 33:245-251.
Piatkevich et al. (2010). Proceedings of the National Academy of Sciences; 107(12): 5369-5374.
Piatkevich et al. (2013). Sci. Rep.; 3: article number 1847.
Pletnev et al. (2013). Acta Crystallogr D Biol Cr; 69(9): 1850-1860.
Rizzo et al. (2004). Nat Biotechnol 2004. 22(4): 445-449.
Sakaue-Sawano et al. (2008). Cell; 132(3): 487-498.
Sarkisyan et al. (2015). Biophysical Journal; 109(2): 380-389.
Shagin et al. (2004). Mol Biol Evol; 21: 841-850.
Shaner et al. (2004). Nat Biotechnol; 22(12): 1567-1572.
Shaner et al. (2005). Nat Methods; 2(12):905-9.
Shaner et al.(2008). Nature Methods; 5(6): 545-551.
Shaner et al. (2013). Nature Methods; 10(5): 407-409.
Shcherbo et al. (2009). Biochem. J.; 418(3): 567-574.
Shcherbo et al. (2010) Nature Methods; 7(10): 827-829.
Shcherbakova et al. (2012) J. Am. Chem. Soc.;134(18): 7913-7923.
Shcherbakova et al. (2013). Nature Methods; 10(8): 751-754.
Shemiakina et al. (2012) Nature Communications; 3: 1204.
Shu et al. (2009). Science;324(5928): 804-807.
Staniszewska et al. (2012). Pol J Microbiol.; 61:129-135.
Subach et al. (2008). Chemistry & Biology; 15(10): 1116-1124.
Subach et al. (2011). PLoS ONE; 6(12): e28674.
Tomosugi et al. (2009). Nature Methods; 6(5): 351 -353.
Tsutsui et al. (2008). Nature Methods; 5(8): 683-685.
Xia et al. (2002). Mar Biotechnol.; 4:155-162.
Yamaoka et al. (2013). Eukaryot Cell.; 12:1162-1170.
Yang et al. (1996). Nucleic Acids Research. 24(22): 4592-4593.
Yang et al. (2013). PLoS ONE; 8(6): e64849.
Yu et al. (2014). Nature Communications; 5: article number: 3626.
Yu et al. (2015). Nature Methods; 12(8): 763-765.
Wang et al. (2004). Proceedings of the National Academy of Sciences; 101 (48): 16745-16749.
Weibel et al. (2007). Nat Rev Microbiol.; 5(3): 209-218.
Wild D. (Ed) (2013). The Immunoassay Handbook, 4ème édition. Elsevier. ISBN 9780080970370.
Wong et Jameson (2011). Chemistry of Protein and Nucleic Acid Cross-linking and Conjugation, 2ème édition. CRC Press. ISBN 9780849374913.
Zacharias et al. (2002). Science; 296:913-916.
Zapata-Hommer et al. (2003). BMC Biotechnology; 3(1): 5.
Zimmer M. (2015a). Illuminating disease : An introduction to green fluorescent proteins, Oxford University. ISBN-13: 978-0199362813.
Zimmer M. (2015b). Bioluminescence: Nature and Science at Work, Twenty-First Century Books. ISBN-13: 978-1467757843.
Zhu et al. (1996). FEBS Lett.; 390(3):271-4.

## Revendications

1. Procédé *in vitro* pour mesurer en temps réel l'épaisseur de la paroi cellulaire de cellules à paroi, comprenant:
a) fournir au moins une cellule isolée ayant une paroi cellulaire, la face externe de ladite paroi cellulaire étant marquée avec au moins un premier marqueur détectable, et la face interne de ladite paroi cellulaire étant marquée avec au moins un second marqueur détectable, lesdits marqueurs étant distincts l'un de l'autre ;
b) imager ladite cellule et détecter lesdits marqueurs à l'aide d'un dispositif optique à haute-résolution, préférablement à l'aide d'un microscope photonique ;
c) déterminer la distance entre ledit premier marqueur sur la face externe et ledit second marqueur sur la face interne, mesurant ainsi l'épaisseur de la paroi cellulaire.

2. Procédé selon la revendication 1, **caractérisé en ce que** ladite cellule à paroi est sélectionnée dans le groupe consistant en les cellules de champignons, de bactéries, d'archées, de plantes, et d'algues.

3. Procédé selon la revendication 1 ou 2, caractérisé ce que ledit premier marqueur détectable est un marqueur luminescent émettant une radiation lumineuse dans une première gamme de longueur d'onde, et ledit second marqueur détectable est un marqueur luminescent émettant une radiation lumineuse dans une seconde gamme de longueur d'onde distincte de la première gamme de longueur d'onde.

4. Procédé selon la revendication 3, **caractérisé en ce que** ledit premier et/ou ledit second marqueur luminescent est un marqueur fluorescent préférablement sélectionné parmi :
- les marqueurs fluorescents protéiques tels que les protéines de fluorescence verte, les protéines de fluorescence rouge ou orange, les protéines de fluorescence cyan, les protéines de fluorescence bleue ou violette, les protéines de fluorescence jaune ; et
- les marqueurs fluorescents non protéiques tels que le DiBAC (bis-(1,3-dibutylbarbituric acid) trimethine oxonol) et ses dérivés, les dérivés de xanthène, les rhodamines et leurs dérivés, les dérivés de cyanine, les dérivés de squaraine, les dérivés de naphthalène, les dérivés de coumarine, les dérivés d'oxadiazole, les dérivés de pyrène, les dérivés d'oxazine, les dérivés d'arylméthine, les marqueurs AlexaFluor.

5. Procédé selon la revendication 3 ou 4, **caractérisé en ce que** :
- ledit premier marqueur luminescent est un couplé à une molécule capable de se lier à la face externe de la paroi cellulaire ; et/ou
- ledit second marqueur luminescent est un couplé à une protéine de la membrane cellulaire ou à une molécule capable de se lier à la membrane cellulaire, ou est capable de se lier à la membrane cellulaire.

6. Procédé selon la revendication 5, **caractérisé en ce que** :
- ladite molécule capable de se lier à la face externe de la paroi cellulaire est une lectine, préférablement sélectionnée dans le groupe des lectines se liant spécifiquement aux motifs de type galactose et/ou à la N-acétylgalactosamine, des lectines se liant spécifiquement aux motifs de type acide sialique et/ou N-acétylglucosamine, des lectines se liant spécifiquement aux motifs de type mannose, et des lectines se liant spécifiquement aux motifs de type fucose ; et/ou
- ladite protéine de la membrane cellulaire est sélectionnée dans le groupe constitué par les protéines membranaires de champignons, les protéines membranaires de bactéries, les protéines membranaires d'archées, les protéines membranaires de plantes, les protéines membranaires d'algues, et leurs homologues ; et/ou
- ladite molécule capable de se lier à la membrane cellulaire est un polypeptide comprenant ou consistant en au moins un domaine de liaison aux lipides tels que ceux appartenant au groupe des domaines CaaX (SEQ ID NO :1), des domaines de myristoylation, des domaines PH, des domaines BAR, des domaines FYVE, des domaines PX, et des domaines ENTH; et/ou
- ledit marqueur luminescent capable de se lier à la membrane cellulaire est sélectionné parmi le DiBAC et ses dérivés.

7. Procédé selon l'une quelconque des revendications 3 à 6, **caractérisé en ce que** l'étape c) de détermination de la distance entre le premier marqueur et le second marqueur comprend :
i) détecter, dans une direction perpendiculaire à la tangente à la paroi cellulaire en un point de ladite paroi, un premier maximum de radiation lumineuse dans ladite première gamme de longueur d'onde et un second maximum de radiation lumineuse dans ladite seconde gamme de longueur d'onde, la distance entre le premier et le second marqueur en ce point étant définie comme la distance entre le premier et le second maximum de radiation lumineuse ; et
ii) optionnellement, répéter l'étape i) en une pluralité de points de la paroi cellulaire.

8. Procédé *in vitro* pour évaluer en temps réel la viabilité cellulaire, la synthèse de la paroi cellulaire, la morphogénèse cellulaire, l'homéostasie de la paroi cellulaire et/ou la polarité de cellules à paroi, comprenant:
a) mesurer en temps réel l'épaisseur de la paroi cellulaire d'au moins une cellule isolée selon le procédé tel que défini dans l'une quelconque des revendications 1 à 7 ; et
b) évaluer la viabilité, la synthèse de la paroi cellulaire, la morphogénèse, l'homéostasie de la paroi cellulaire et/ou la polarité de ladite cellule, en fonction de l'épaisseur de la paroi cellulaire mesurée à l'étape a).

9. Procédé *in vitro* pour déterminer la résistance de cellules à paroi envers un agent ou combinaison d'agents capables de modifier l'épaisseur de la paroi cellulaire, comprenant :
a) mesurer en temps réel l'épaisseur de la paroi cellulaire d'au moins une cellule isolée selon le procédé tel que défini dans l'une quelconque des revendications 1 à 7, en présence d'un agent ou combinaison d'agents capables de modifier l'épaisseur de la paroi cellulaire et optionnellement en absence dudit agent ou de ladite combinaison d'agents ;
b) déterminer si l'épaisseur de la paroi cellulaire est modifiée par ledit agent ou ladite combinaison d'agents ; et
c) optionnellement, déterminer la résistance de la cellule envers l'agent ou combinaison d'agents capables de modifier l'épaisseur de la paroi cellulaire.

10. Procédé pour déterminer ou adapter un régime thérapeutique destiné à un sujet infecté par une cellule à paroi pathogène, comprenant :
a) déterminer la résistance d'au moins une cellule à paroi isolée dudit sujet envers un agent ou combinaison d'agents capables de modifier l'épaisseur de la paroi cellulaire, selon le procédé tel que défini dans la revendication 9 ; et
b) déterminer ou adapter un régime de traitement en fonction de la résistance ou de la non-résistance de la cellule à paroi envers ledit agent ou ladite combinaison d'agents, telle que déterminée à l'étape a).

11. Procédé *in vitro* pour cribler des agents capables de modifier l'épaisseur de la paroi cellulaire de cellules à paroi, comprenant :
a) mesurer en temps réel l'épaisseur de la paroi cellulaire d'au moins une cellule isolée selon le procédé tel que défini dans l'une quelconque des revendications 1 à 7, en présence d'un agent candidat ou combinaison d'agents candidats et optionnellement en absence dudit agent ou de ladite combinaison d'agents ;
b) déterminer si l'épaisseur de la paroi cellulaire est modifiée par ledit agent ou ladite combinaison d'agents ; et
c) optionnellement, identifier l'agent ou combinaison d'agents capables de modifier l'épaisseur de la paroi cellulaire de ladite cellule.

12. Utilisation d'un kit pour la mise en oeuvre de l'un quelconque des procédés tels que définis dans les revendications 1 à 11, ledit kit comprenant
a) un premier marqueur luminescent couplé à une molécule capable de se lier à la face externe de la paroi cellulaire d'une cellule à paroi ; et
b) un second marqueur luminescent couplé à une molécule capable de se lier à la membrane cellulaire de ladite cellule ou à une protéine de la membrane cellulaire de ladite cellule, ou un second marqueur luminescent capable de se lier à la membrane cellulaire de ladite cellule.

## Patentansprüche

1. In-vitro-Verfahren zum Messen in Echtzeit der Dicke der Zellwand von Zellen mit Wand, umfassend:
a) Bereitstellen mindestens einer isolierten Zelle, die eine Zellwand aufweist, wobei die Außenseite dieser Zellwand mit mindestens einem ersten nachweisbaren Marker gekennzeichnet ist und die Innenseite dieser Zellwand mit mindestens einem zweiten nachweisbaren Marker gekennzeichnet ist, wobei sich die Marker voneinander unterscheiden;
b) Abbilden der Zelle und Nachweisen der Marker mithilfe einer hochauflösenden optischen Vorrichtung, vorzugsweise mit einem Lichtmikroskop;
c) Bestimmen des Abstands zwischen dem ersten Marker auf der Außenseite und dem zweiten Marker auf der Innenseite, wodurch die Dicke der Zellwand gemessen wird.

2. Verfahren nach Anspruch 1, **dadurch gekennzeichnet, dass** die Zelle mit Wand aus der Gruppe ausgewählt wird bestehend aus Zellen von Pilzen, Bakterien, Archaeen, Pflanzen und Algen.

3. Verfahren nach Anspruch 1 oder 2, **dadurch gekennzeichnet, dass** der erste nachweisbare Marker ein lumineszierender Marker ist, der eine Lichtstrahlung in einem ersten Wellenlängenbereich abstrahlt, und der zweite nachweisbare Marker ein lumineszierender Marker ist, der eine Lichtstrahlung in einem zweiten Wellenlängenbereich abstrahlt, der sich von dem ersten Wellenlängenbereich unterscheidet.

4. Verfahren nach Anspruch 3, **dadurch gekennzeichnet, dass** der erste und/oder der zweite lumineszierende Marker ein fluoreszierender Marker ist, der vorzugsweise ausgewählt wird aus:
- eiweißhaltigen fluoreszierenden Markern, wie grün fluoreszierende Proteine, rot oder orange fluoreszierende Proteine, cyan fluoreszierende Proteine, blau oder violett fluoreszierende Proteine, gelb fluoreszierende Proteine; und
- nicht eiweißhaltigen fluoreszierenden Markern, wie DiBAC (bis-(1,3-Dibutylbarbitursäure)Trimethinoxonol) und seine Derivate, Xanthenderivate, Rhodamine und deren Derivate, Cyaninderivate, Squarainderivate, Naphthalinderivate, Cumarinderivate, Oxadiazolderivate, Pyrenderivate, Oxazinderivate, Arylmethinderivate, AlexaFluor-Marker.

5. Verfahren nach Anspruch 3 oder 4, **dadurch gekennzeichnet, dass**
- der erste lumineszierende Marker an ein Molekül gekoppelt ist, das an die Außenseite der Zellwand binden kann; und/oder
- der zweite lumineszierende Marker an ein Protein der Zellmembran oder ein Molekül gekoppelt ist, das an die Zellmembran binden kann, oder in der Lage ist, an die Zellmembran zu binden.

6. Verfahren nach Anspruch 5, **dadurch gekennzeichnet, dass**
- das Molekül, das an die Außenseite der Zellwand binden kann, ein Lektin ist, das vorzugsweise aus der Gruppe der Lektine ausgewählt wird, die spezifisch an Galactoseeinheiten und/oder N-Acetylgalactosamin binden, die spezifisch an Sialinsäureeinheiten und/oder N-Acetylglucosamin binden, die spezifisch an Mannoseeinheiten binden und die spezifisch an Fucoseeinheiten binden; und/oder
- das Protein der Zellmembran aus der Gruppe ausgewählt wird bestehend aus Membranproteinen von Pilzen, Membranproteinen von Bakterien, Membranproteinen von Archaeen, Membranproteinen von Pflanzen, Membranproteinen von Algen und ihren Pendants; und/oder
- das Molekül, das an die Zellmembran binden kann, ein Polypeptid ist, umfassend oder bestehend aus mindestens einer Lipid-Bindungsdomäne, wie diejenigen, die zu der Gruppe der CaaX-Domänen (SEQ ID NO: 1), der Myristoylierungsdomänen, der PH-Domänen, der BAR-Domänen, der FYVE-Domänen, der PX-Domänen und der ENTH-Domänen gehören; und/oder
- der lumineszierende Marker, der in der Lage ist, an die Zellmembran zu binden, ausgewählt wird aus DiBAC und seinen Derivaten.

7. Verfahren nach einem der Ansprüche 3 bis 6, **dadurch gekennzeichnet, dass** der Schritt c) der Bestimmung des Abstands zwischen dem ersten Marker und dem zweiten Marker umfasst:
i) Nachweisen, in einer Richtung senkrecht zu der Tangente an der Zellwand an einem Punkt der Wand, eines ersten Maximums der Lichtstrahlung in dem ersten Wellenlängenbereich und eines zweiten Maximums der Lichtstrahlung in dem zweiten Wellenlängenbereich, wobei der Abstand zwischen dem ersten und dem zweiten Marker an diesem Punkt definiert wird als der Abstand zwischen dem ersten und dem zweiten Maximum der Lichtstrahlung; und
ii) wahlweise Wiederholen von Schritt i) an einer Vielzahl von Punkten der Zellwand.

8. In-vitro-Verfahren zum Beurteilen in Echtzeit der Lebensfähigkeit von Zellen, der Synthese der Zellwand, der Morphogenese von Zellen, der Homöostase der Zellwand und/oder der Polarität von Zellen mit Wand, umfassend:
a) Messen in Echtzeit der Dicke der Zellwand von mindestens einer isolierten Zelle nach dem Verfahren nach einem der Ansprüche 1 bis 7; und
b) Beurteilen der Lebensfähigkeit, der Synthese der Zellwand, der Morphogenese, der Homöostase der Zellwand und/oder der Polarität der Zelle in Abhängigkeit von der Dicke der Zellwand, die in Schritt a) gemessen wurde.

9. In vitro-Verfahren zum Bestimmen der Widerstandsfähigkeit der Zellen mit Wand gegenüber einer Substanz oder einer Kombination von Substanzen, die in der Lage sind, die Dicke der Zellwand zu verändern, umfassend:
a) Messen in Echtzeit der Dicke der Zellwand von mindestens einer isolierten Zelle nach dem Verfahren nach einem der Ansprüche 1 bis 7 in Gegenwart einer Substanz oder einer Kombination von Substanzen, die in der Lage sind, die Dicke der Zellwand zu verändern, und optional in Abwesenheit der Substanz oder der Kombination von Substanzen;
b) Bestimmen, ob die Dicke der Zellwand durch die Substanz oder die Kombination von Substanzen verändert wird; und
c) optional Bestimmen der Widerstandsfähigkeit der Zelle gegenüber der Substanz oder der Kombination von Substanzen, die in der Lage sind, die Dicke der Zellwand zu verändern.

10. Verfahren zum Bestimmen oder Anpassen einer therapeutischen Behandlung für eine Person, die mit einer pathogenen Zelle mit Wand infiziert ist, umfassend:
a) Bestimmen der Widerstandsfähigkeit mindestens einer isolierte Zelle mit Wand der Person gegenüber einer Substanz oder einer Kombination von Substanzen, die in der Lage sind, die Dicke der Zellwand zu verändern, nach dem Verfahren nach Anspruch 9; und
b) Bestimmen oder Anpassen einer Behandlung in Abhängigkeit von der Widerstandsfähigkeit oder der nicht vorhandenen Widerstandsfähigkeit der Zelle mit Wand gegenüber der Substanz oder der Kombination von Substanzen wie sie in Schritt a) bestimmt wurde.

11. In-vitro-Verfahren zum Screenen der Substanzen, die in der Lage sind, die Dicke der Zellwand von Zellen mit Wand zu verändern, umfassend:
a) Messen in Echtzeit der Dicke der Zellwand von mindestens einer isolierten Zelle nach dem Verfahren nach einem der Ansprüche 1 bis 7 in Gegenwart einer Kandidatensubstanz oder einer Kombination von Kandidatensubstanzen und optional in Abwesenheit der Substanz oder der Kombination von Substanzen;
b) Bestimmen, ob die Dicke der Zellwand durch die Substanz oder die Kombination von Substanzen verändert wird; und
c) optional Identifizieren der Substanz oder der Kombination von Substanzen, die in der Lage sind, die Dicke der Zellwand dieser Zelle zu verändern.

12. Verwendung eines Kits für die Implementierung eines der Verfahren nach den Ansprüchen 1 bis 11, wobei das Kit umfasst:
a) einen ersten lumineszierenden Marker, der an ein Molekül gekoppelt ist, das an die Außenseite der Zellwand einer Zelle mit Wand binden kann; und
b) einen zweiten lumineszierenden Marker, der an ein Molekül gekoppelt ist, das an die Zellmembran dieser Zelle oder an ein Protein der Zellmembran dieser Zelle binden kann, oder einen zweiten lumineszierenden Marker, der an die Zellmembran dieser Zelle binden kann.

## Claims

1. An *in vitro* process for real-time measurement of the thickness of the cell wall of walled cells, comprising:
a) providing at least one isolated cell having a cell wall, the outer side of said cell wall being labeled with at least one first detectable marker, and the inner side of said cell wall being labeled with at least one second detectable marker, said markers being distinct from each other;
b) imaging said cell and detecting said markers using a high-resolution optical device, preferably using a photonic microscope;
c) determining the distance between said first marker on the outer side and said second marker on the inner side, thereby measuring the thickness of the cell wall.

2. The process as claimed in claim 1, **characterized in that** said walled cell is selected from the group consisting of cells of fungi, bacteria, archaea, plants, and algae.

3. The process as claimed in claim 1 or 2, **characterized in that** said first detectable marker is a luminescent marker emitting light radiation in a first wavelength range, and said second detectable marker is a luminescent marker emitting light radiation in a second wavelength range distinct from the first wavelength range.

4. The process as claimed in claim 3, **characterized in that** said first and/or said second luminescent marker is a fluorescent marker preferably selected from:
- protein fluorescent markers such as green fluorescence proteins, red or orange fluorescence proteins, cyan fluorescence proteins, blue or violet fluorescence proteins, yellow fluorescence proteins; and
- non-protein fluorescent markers such as DiBAC (bis-(1,3-dibutylbarbituric acid) trimethine oxonol) and derivatives thereof, xanthene derivatives, rhodamines and derivatives thereof, cyanine derivatives, squaraine derivatives, naphthalene derivatives, coumarin derivatives, oxadiazole derivatives, pyrene derivatives, oxazine derivatives, arylmethine derivatives, AlexaFluor markers.

5. The process as claimed in claim 3 or 4, **characterized in that**:
- said first luminescent marker is one coupled to a molecule capable of binding to the outer side of the cell wall; and/or
- said second luminescent marker is one coupled to a cell membrane protein or to a molecule capable of binding to the cell membrane, or is capable of binding to the cell membrane.

6. The process as claimed in claim 5, **characterized in that**:
- said molecule capable of binding to the outer side of the cell wall is a lectin, preferably selected from the group of lectins specifically binding to galactose type units and/or to N-acetylgalactosamine, lectins specifically binding to sialic acid type units and/or to N-acetylglucosamine, lectins specifically binding to mannose type units, and lectins specifically binding to fucose type units; and/or
- said cell membrane protein is selected from the group consisting of fungal membrane proteins, bacterial membrane proteins, archaea membrane proteins, plant membrane proteins, algal membrane proteins, and homologues thereof; and/or
- said molecule capable of binding to the cell membrane is a polypeptide comprising or consisting of at least one lipid binding domain such as those belonging to the group of CaaX domains (SEQ ID NO: 1), myristoylation domains, PH domains, BAR domains, FYVE domains, PX domains, and ENTH domains; and/or
- said luminescent marker capable of binding to the cell membrane is selected from DiBAC and derivatives thereof.

7. The process as claimed in any one of claims 3 to 6, **characterized in that** step c) of determining the distance between the first marker and the second marker comprises:
i) detecting, in a direction perpendicular to the tangent to the cell wall at a point on said wall, a first light radiation maximum in said first wavelength range and a second light radiation maximum in said second wavelength range, the distance between the first and second marker at that point being defined as the distance between the first and second light radiation maximum; and
ii) optionally, repeating step i) at a plurality of points on the cell wall.

8. An *in vitro* process for real-time assessment of the cell viability, cell wall synthesis, cell morphogenesis, cell wall homeostasis and/or polarity of walled cells, comprising:
a) measuring in real time the thickness of the cell wall of at least one cell isolated according to the process as defined in any one of claims 1 to 7; and
b) assessing the viability, cell wall synthesis, morphogenesis, cell wall homeostasis and/or polarity of said cell, as a function of the thickness of the cell wall measured in step a).

9. An *in vitro* process for determining the resistance of walled cells to an agent or combination of agents capable of modifying thickness of the cell wall, comprising:
a) measuring in real time the thickness of the cell wall of at least one cell isolated according to the process as defined in any one of claims 1 to 7, in the presence of an agent or combination of agents capable of modifying the thickness of the cell wall and optionally in the absence of said agent or combination of agents;
b) determining whether the thickness of the cell wall is altered by said agent or combination of agents; and
c) optionally, determining the resistance of the cell to the agent or combination of agents capable of altering the thickness of the cell wall.

10. A process for determining or adapting a therapeutic regimen for a subject infected with a pathogenic walled cell, comprising:
a) determining the resistance of at least one walled cell isolated from said subject to an agent or combination of agents capable of modifying the thickness of the cell wall, according to the process as defined in claim 9; and
b) determining or adapting a treatment regimen based on the resistance or non-resistance of the walled cell to said agent or said combination of agents, as determined in step a).

11. An *in vitro* process for screening for agents capable of modifying the thickness of the cell wall of walled cells, comprising:
a) measuring in real time the thickness of the cell wall of at least one cell isolated according to the process as defined in any one of claims 1 to 7, in the presence of a candidate agent or combination of candidate agents and optionally in the absence of said agent or combination of agents;
b) determining whether the thickness of the cell wall is altered by said agent or combination of agents; and
c) optionally, identifying the agent or combination of agents capable of modifying the thickness of the cell wall of said cell.

12. Use of a kit for carrying out any one of the processes as defined in claims 1 to 11, said kit comprising
a) a first luminescent marker coupled to a molecule capable of binding to the outer side of the cell wall of a walled cell; and
b) a second luminescent marker coupled to a molecule capable of binding to the cell membrane of said cell or to a cell membrane protein of said cell, or a second luminescent marker capable of binding to the cell membrane of said cell.
